(19)

Europäisches
Patentamt
European
Patent Office
Office européen
des brevets

(11) **EP 4 609 998 A1**

(12)

# EUROPEAN PATENT APPLICATION
published in accordance with Art. 153(4) EPC

(43) Date of publication:
**03.09.2025   Bulletin 2025/36**

(21) Application number: 23937269.1

(22) Date of filing: **15.11.2023**

(51) International Patent Classification (IPC):
**B25J 9/16** *(2006.01)*       **B25J 11/00** *(2006.01)*

(52) Cooperative Patent Classification (CPC):
**B25J 9/16; B25J 11/00**

(86) International application number:
**PCT/CN2023/131776**

(87) International publication number:
**WO 2024/234596 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **17.05.2023   CN 202310563089**

(71) Applicant: **Tencent Technology (Shenzhen)
Company Limited
Shenzhen, Guangdong 518057 (CN)**

(72) Inventors:
• **ZHOU, Qinqin
  Shenzhen, Guangdong 518057 (CN)**

• **WANG, Haitao
  Shenzhen, Guangdong 518057 (CN)**
• **ZHANG, Yufeng
  Shenzhen, Guangdong 518057 (CN)**
• **WANG, Shuai
  Shenzhen, Guangdong 518057 (CN)**
• **CHI, Wanchao
  Shenzhen, Guangdong 518057 (CN)**
• **ZHENG, Yu
  Shenzhen, Guangdong 518057 (CN)**
• **LI, Xiong
  Shenzhen, Guangdong 518057 (CN)**

(74) Representative: **EP&C
P.O. Box 3241
2280 GE Rijswijk (NL)**

(54) **ROBOT CONTROL METHOD AND APPARATUS, DEVICE, AND STORAGE MEDIUM**

(57)      A robot control method and apparatus, a device, and a storage medium, relating to the technical field of artificial intelligence. The method comprises: for a robot comprising a first robotic leg group and a second robotic leg group, the rotation center of a hip joint corresponding to the first robotic leg group and the rotation center of a hip joint corresponding to the second robotic leg group being located on a same vertical plane, controlling the first robotic leg group and the second robotic leg group of the robot to swing alternately, so that the robot can move in a first direction on a support surface (602). According to the method, by controlling the robotic legs of the robot to move in a swinging manner, the robot can quickly move under a dynamically balanced state (namely the gravity center of the robot can exceed a supporting area of the robot), thereby improving the moving efficiency of the robot. Moreover, by controlling the robotic legs to swing alternately, the moving efficiency of the robot can be further improved.

Control the robotic legs of the robot to stand on a support surface in an overlapping standing state in which the respective robotic legs standing on the support surface are in alignment in a first direction — 601

Control the first robotic leg set and the second robotic leg set to swing alternately to achieve the movement of the robot on the support surface along the first direction — 602

FIG. 6

EP 4 609 998 A1

**Description**

RELATED APPLICATION

This application claims priority to Chinese Patent Application No. 202310563089.1, filed on May 17, 2023 and entitled "CONTROL METHOD AND APPARATUS FOR ROBOT, DEVICE, AND STORAGE MEDIUM", which is incorporated herein by reference in its entirety.

FIELD OF THE TECHNOLOGY

Embodiments of this disclosure relate to the field of artificial intelligence (AI) technologies, and in particular, to a control method and apparatus for a robot, a device, and a storage medium.

BACKGROUND OF THE DISCLOSURE

As robot control technologies develop, some organizations and science and research centers successively launch wheeled-legged robots having a wheel as a foot. With the wheel foot, the wheeled-legged robots not only can slide quickly, but also can climb a staircase and cross an obstacle.

Taking a wheeled-legged robot climbing a staircase as an example, in the related art, the wheeled-legged robot is controlled through a heuristic method. For example, a projection of a center of gravity of the wheeled-legged robot is controlled to move slowly in a stance area of the wheeled-legged robot through planning of a position of a robotic leg of the wheeled-legged robot relative to the staircase, to achieve staircase climbing. The method utilizes static staircase climbing, to be specific, the projection of the center of gravity of the robot does not exceed the stance area of the robot. Therefore, staircase climbing efficiency of the robot needs to be improved.

SUMMARY

Embodiments of this disclosure provide a control method and apparatus for a robot, a device, and a storage medium, which can improve robot movement efficiency. The technical solutions are as follows:

According to an aspect of the embodiments of this disclosure, a robot control method is provided. The method is performed by a computer device, the robot includes: a body; a first robotic leg set and a second robotic leg set each connected to the body through one or more hip joints. At least one of the first robotic leg set and the second robotic leg set includes at least two robotic legs symmetrically arranged on two sides of a central axis of the robot, and rotation centers of the hip joints of the first robotic leg set and the second robotic leg set are coplanar within a vertical plane of the body. The method includes:

in an initial state of movement of the robot, controlling the robot to stand on a support surface in an overlapping standing state, wherein in the overlapping standing state, position derivation among the respective robotic legs in contact with the support surface in a first direction is zero; and

controlling the first robotic leg set and the second robotic leg set to swing alternately to achieve a movement of the robot on the support surface along the first direction.

According to an aspect of the embodiments of this disclosure, a robot control apparatus is provided. The robot includes: a body; a first robotic leg set and a second robotic leg set each connected to the body through one or more hip joints. At least one of the first robotic leg set and the second robotic leg set includes at least two robotic legs symmetrically arranged on two sides of a central axis of the robot, and rotation centers of the hip joints of the first robotic leg set and the second robotic leg set are coplanar within a vertical plane of the body. The apparatus includes:

a standing state control module, configured to control, in an initial state of movement of the robot, the robot to stand on a support surface in an overlapping standing state, wherein in the overlapping standing state, position derivation among the respective robotic legs in contact with the support surface in a first direction being zero; and

a swinging state control module, configured to control the first robotic leg set and the second robotic leg set to swing alternately to achieve a movement of the robot on the support surface along the first direction.

According to an aspect of embodiments of this disclosure, a computer device is provided, including a processor and a memory, the memory having a computer program stored therein, and the computer program being loaded and executed by the processor to perform the foregoing robot control method.

According to an aspect of the embodiments of this disclosure, a computer-readable storage medium is provided, having a computer program stored therein, the computer program being loaded and executed by a processor to implement the foregoing robot control method.

According to an aspect of the embodiments of this disclosure, a computer program product is provided, including a computer program, the computer program being stored in a computer-readable storage medium. A processor of a computer device reads the computer program from the computer-readable storage medium, and the processor executes the computer program to cause the computer device to perform the foregoing robot control method.

The technical solutions provided in the embodiments of this disclosure may include the following beneficial effects:

For a robot having a first robotic leg set and a second robotic leg set, because centers of rotation of hip joints corresponding to the first robotic leg set and the second robotic leg set are located on a same vertical plane, one robotic leg set may be caused to stand, and the other robotic leg set may be caused to swing, so that the robot quickly moves in a dynamic balanced state (to be specific, a center of gravity of the robot may exceed a stance area of the robot), thereby improving robot movement efficiency. In addition, controlling the first robotic leg set and the second robotic leg set to swing alternately to control the robot to move can further improve the robot movement efficiency.

BRIEF DESCRIPTION OF THE DRAWINGS

FIG. 1 is a schematic diagram of an implementation environment of a solution according to an embodiment of this disclosure.

FIG. 2 is a schematic diagram of a quadruped wheeled-legged robot according to an embodiment of this disclosure.

FIG. 3 is a schematic diagram of a wheeled-legged robot climbing a staircase according to an embodiment of this disclosure.

FIG. 4 is a schematic diagram of a wheeled-legged robot crossing a road shoulder according to an embodiment of this disclosure.

FIG. 5 is a schematic diagram of a wheeled-legged robot crossing a pit according to an embodiment of this disclosure.

FIG. 6 is a schematic diagram of a robot control method according to an embodiment of this disclosure.

FIG. 7 is a schematic diagram of a wheeled-legged robot in an overlapping standing state according to an embodiment of this disclosure.

FIG. 8 is a schematic diagram of a movement method for a robot according to an embodiment of this disclosure.

FIG. 9 is a schematic diagram of gait information of a robot according to an embodiment of this disclosure.

FIG. 10 to FIG. 12 are schematic diagrams illustrating that a quadruped wheeled-legged robot climbs a staircase.

FIG. 13 is a flowchart of a movement method for a robot according to another embodiment of this disclosure.

FIG. 14 is a schematic diagram of a planar model of a wheeled-legged robot according to an embodiment of this disclosure.

FIG. 15 is a schematic diagram of a planar model of a wheeled-legged robot climbing a staircase according to an embodiment of this disclosure.

FIG. 16 is a schematic diagram of an inverted pendulum model of a wheeled-legged robot according to an embodiment of this disclosure.

FIG. 17 to FIG. 20 are schematic diagrams illustrating that a robot follows each reference movement trajectory.

FIG. 21 is a block diagram of a robot control apparatus according to an embodiment of this disclosure.

FIG. 22 is a block diagram of another robot control apparatus according to an embodiment of this disclosure.

FIG. 23 is a simplified structural block diagram of a computer device according to an embodiment of this disclosure.

DESCRIPTION OF EMBODIMENTS

To make objectives, technical solutions, and advantages of this disclosure clearer, implementations of this disclosure are further described in detail below with reference to drawings.

Artificial intelligence (AI) is a theory, a method, a technology, and an application system that use a digital computer or a machine controlled by the digital computer to simulate, extend, and expand human intelligence, so as to sense an environment, obtain knowledge, and obtain an optimal result with knowledge. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and involves a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include major directions such as a computer vision (CV) technology, a speech processing technology, a natural language processing technology, and machine learning/deep learning.

Technical solutions of this disclosure mainly relate to a robot technology in the artificial intelligence technology, and mainly relate to intelligent robot control. A robot is a mechanical electronic device that is formed through combination of mechanical transmission and modern microelectronic technologies and can imitate a skill of a human, which is developed based on electronic, mechanical, and information technologies. A robot does not necessarily look like a person, and is a member of a large robot family provided that the robot can autonomously complete tasks and commands assigned to the robot by a human. A robot is an automated machine which has some intelligent capabilities, such as a perception capability, a planning capability, an action capability, and a collaborative capability, similar to those of a person or a living creature, and is an automated machine with high flexibility. As computer technologies and artificial intelligence technologies develop, robots are significantly improved in function and technologies. Technologies such as mobile robots and robot vision and touch are typical representatives.

In the technical solutions provided in the embodiments of this disclosure, each operation may be performed by a computer device. The computer device refers to an electronic device having data computing, processing, and storage capabilities.

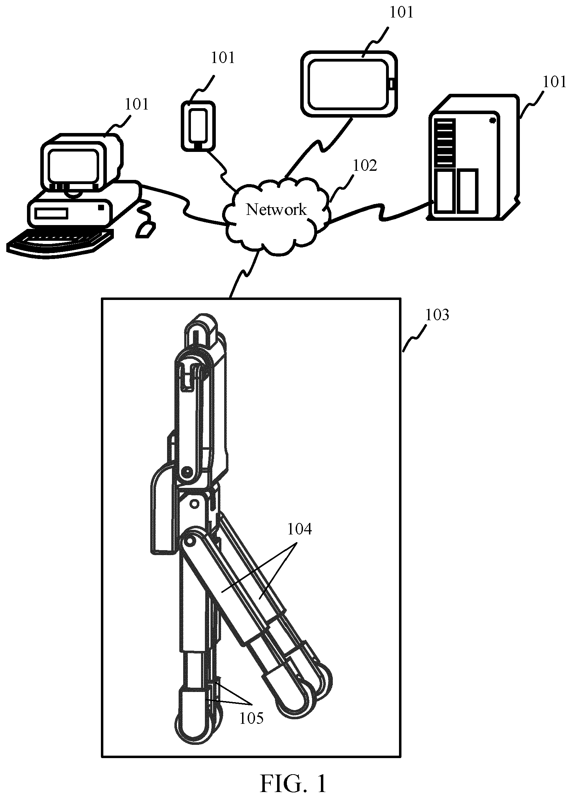

In all embodiments, the computer device may be a personal computer (PC) device configured to control robots, such as a desktop computer or a laptop computer, or may be a server configured to control a robot. The server may be an independent physical server, or may be a server cluster or a distributed system composed of a plurality of physical servers, or may be a cloud server providing a cloud computing service. The computer device and the robot may be connected by using a physical line, a network, or the like. For example, referring to FIG. 1, a computer device 101 may control, through a network 102, a robot 103 to move based on a reference movement trajectory (for example, a stance reference movement trajectory, a center-of-mass reference movement trajectory, and a swinging reference movement trajectory in the following) of the robot 103. For example, the computer device 101 may control a first robotic leg set 104 and a second robotic leg set 105 of the robot 103 to swing alternately based on the reference movement trajectory of the robot 103, so that the robot 103 moves on a support surface in a first direction.

In the embodiments of the present disclosure including the embodiments of both the claims and the specification (hereinafter referred to as "all embodiments of the present disclosure"), the computer device may be a robot. In other words, steps in the technical solutions provided in all embodiments of this disclosure may be performed by a robot. For example, referring to FIG. 1, the computer device 101 may transmit the reference movement trajectory of robot 103 to robot 103 through the network 102, and the robot 103 moves based on the reference movement trajectory. In all embodiments, robot 103 may automatically obtain the reference movement trajectory based on a real environment, to execute different tasks in the real environment. This is not limited in the embodiments of the present disclosure.

The robot in all embodiments of the present disclosure may be a wheeled-legged robot, a legged robot, or the like. The wheeled-legged robot is a robot having a wheel as a foot portion, and the legged-footed robot is a robot with a foot as a foot portion. This is not limited in the embodiments of the present disclosure.

In all embodiments, the robot may include a body, and a first robotic leg set and a second robotic leg set connected to the body through hip joints. At least one of the first robotic leg set and the second robotic leg set includes at least two robotic legs. For example, the first robotic leg set includes at least two robotic legs, and the second robotic leg set may also include at least two robotic legs. At least two robotic legs of the first robotic leg set are respectively located on two sides of a central axis (that is, a sagittal plane) of the robot. At least two robotic legs of the second robotic leg set are respectively located on the two sides of the central axis of the robot. The first robotic leg set and the second robotic leg set are distributed side by side. In other words, rotation centers of hip joints of the first robotic leg set and the second robotic leg set are coplanar within a vertical plane.

The robot in the embodiments of the present disclosure is described by using the wheeled-legged robot as an example.

The wheeled-legged robot in all embodiments of this disclosure may include a body, and an outer robotic leg set (i.e., the first robotic leg set) and an inner robotic leg set (i.e., the second robotic leg set) connected to the body through hip joints. The outer robotic leg set may include two outer robotic legs, and the inner robotic leg set may include at least one inner robotic leg. Exemplarily, the wheeled-legged robot is a quadruped wheeled-legged robot. In other words, the wheeled-legged robot includes two outer robotic legs and two inner robotic legs. The wheeled-legged robot may alternatively be a tripedal wheeled-legged robot. In other words, the wheeled-legged robot includes two outer robotic legs and one inner robotic leg. A hip joint corresponding to at least one inner robotic leg in the inner robotic leg set is located between hip joints corresponding to two outer robotic legs in the outer robotic leg set, and centers of rotation of the hip joints corresponding to the outer robotic legs and centers of rotation of the hip joints corresponding to the inner robotic legs are located on a same vertical plane. The wheeled-legged robot can stand on the support surface through the outer robotic legs or the inner robotic legs, slide on the support surface through foot wheels on the outer robotic legs or the inner robotic legs, or move (i.e., walk) on the support surface by controlling the outer robotic leg set and the inner robotic leg set to swing alternately.

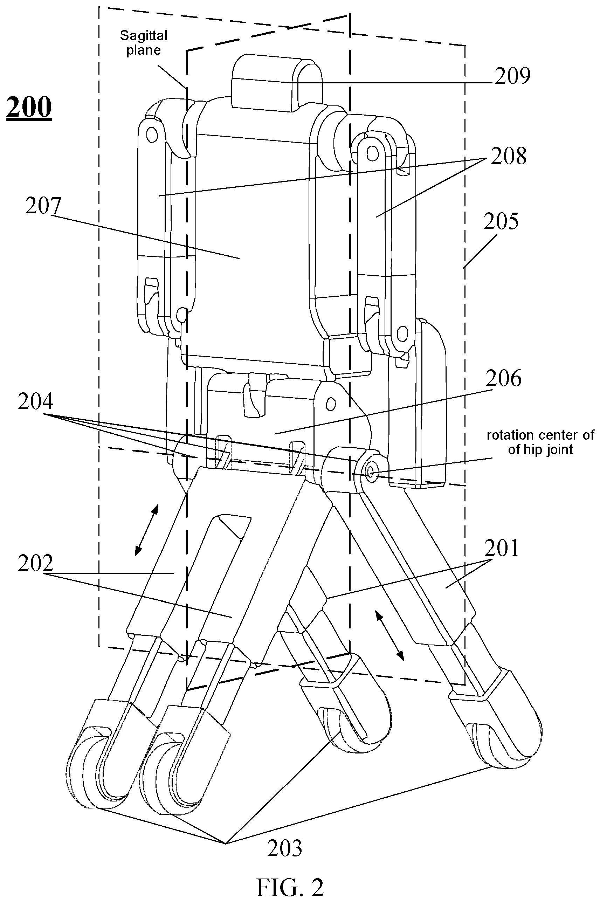

Exemplarily, FIG. 2 illustrates a schematic structural diagram of a quadruped wheeled-legged robot. A quadruped wheeled-legged robot 200 may include a body, a hip joint, and a robotic leg.

The quadruped wheeled-legged robot 200 has four robotic legs, i.e., two outer robotic legs 201 (i.e., a first robotic leg set) and two inner robotic legs 202 (i.e., a second robotic leg set). The two inner robotic legs 202 are located between the two outer robotic legs 201, and the four robotic legs each can stretch/contract in a direction shown in the figure alone. A foot wheel 203 is mounted to an end of each of the four robotic legs, and each foot wheel 203 may be independently driven. The quadruped wheeled-legged robot 200 may stand through two inner robotic legs 202 or two outer robotic legs 201, so as to be in a two-feet stance state. The quadruped wheeled-legged robot 200 may stand through the two inner robotic legs 202 and the two outer robotic legs 201, so as to be in a four-feet stance state. This is not limited in the embodiments of this disclosure.

In all embodiments, the two inner robotic legs 202 may be implemented as a whole. In other words, the quadruped wheeled-legged robot 200 may be implemented as a tripedal wheeled-legged robot, which has only one inner robotic leg.

Other ends of the four robotic legs are respectively connected to a hip joint 204, and the robotic legs may rotate about the respective hip joints 204 and remain in linkage. In the embodiments of this disclosure, centers of rotation of the hip joints 204 corresponding to the quadruped wheeled-legged robot 200 are located on a same vertical plane 205, and planes of rotation of the robotic legs corresponding to the quadruped wheeled-legged robot 200 are parallel. The hip joints 204 corresponding to the two inner robotic legs 202 are located between the hip joints 204 corresponding to the two outer robotic legs 201.

In all embodiments, the hip joints 204 corresponding to the quadruped wheeled-legged robot 200 may be coaxial, that is, the centers of rotation of the hip joints 204 are located on a same straight line. The hip joints 204 corresponding to the quadruped wheeled-legged robot 200 may alternatively be non-coaxial. For example, the hip joints 204 corresponding to the two inner robotic legs 202 are coaxial, and the hip joints 204 corresponding to the two outer robotic legs 201 are coaxial, but the hip joints 204 corresponding to the two inner robotic legs 202 and the hip joints 204 corresponding to the two outer robotic legs 201 are non-coaxial.

In all embodiments, the hip joints 204 corresponding to the two outer robotic legs 201 may share a driving motor, so that the two outer robotic legs 201 move synchronously. The hip joints 204 corresponding to the two inner robotic legs 202 share a driving motor, so that the two inner robotic legs 202 move synchronously. In a feasible example, each hip joint 204 corresponding to the quadruped wheeled-legged robot 200 may alternatively be independently driven by a corresponding driving motor. This is not limited in the embodiments of this disclosure.

The body of the quadruped wheeled-legged robot 200 may include a waist 206, a torso 207, a head 208, and an upper leg 209.

The hip joints 204 corresponding to the quadruped wheeled-legged robot 200 are connected to one same end of the waist 206, and an other end of the waist 206 are connected to one end of the torso 207. The waist 206 has two centers of rotation, i.e., a pitch rotation center that enables the torso 207 to implement pitching and a sideway swinging rotation center that enables the torso 207 to implement sideway swinging. The sideway swinging rotation center is maintained in a series design with the pitch rotation center, is located above the pitch rotation center, and is connected to the torso 207.

An other end of the torso 207 is connected to the head 208 and the upper limb 209, and the upper limb 209 may be an upper limb with a plurality of degrees of freedom. In all embodiments, an end actuator, such as a robotic claw or a sucker, may be arranged on an upper part of the upper arm 209. A data collection device, such as an image capture device or a video recording device, may be arranged in the head 208 to sense a real environment.

In the technical solution provided in the embodiments of this disclosure, the foot wheels, the robotic legs, the hip joints, and the waist of the quadruped wheeled-legged robot 200 are necessary hardware for a control algorithm, and the other components are unnecessary hardware.

The quadruped wheeled-legged robot has a more stable structure and a stronger capability of withstanding external impact and disturbance compared with a biped wheeled-legged robot, and has fewer redundant joints and lower design complexity compared with a hexapod wheeled-legged robot. In addition, the quadruped wheeled-legged robot can bear a large load, pass through a narrow space, and execute tasks for objects at different heights, which has a strong capability of adapting to an environment.

The robot control method provided in the embodiments of this disclosure is applicable to a plurality of scenarios, such as a robot climbing a staircase, a robot crossing a doorsill, a robot crossing a road shoulder, a robot crossing a pit, and any scenario of crossing an obstacle. A robot using the technical solution provided in the embodiments of this disclosure has a stronger capability of adapting to an environment. The robot control method provided in the embodiments of this disclosure can improve robot movement efficiency.

An application scenario of the technical solutions provided in the embodiments of this disclosure is illustrated by using a wheeled-legged robot as an example.

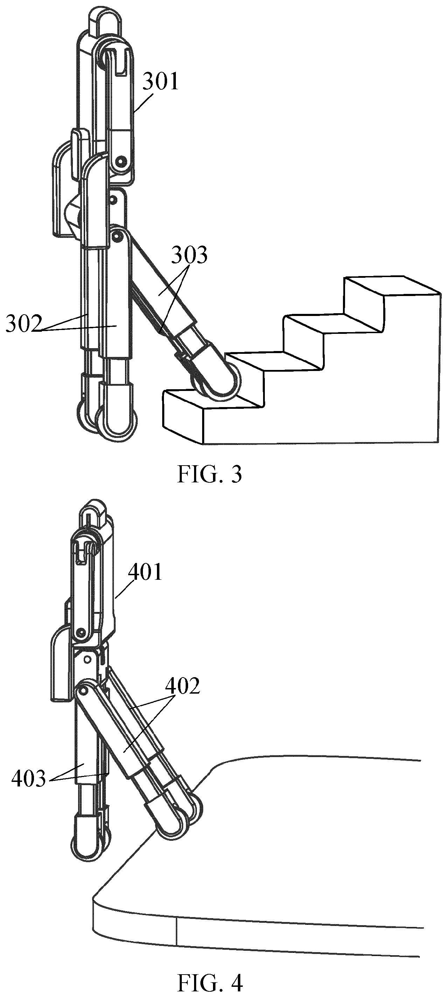

In all embodiments, referring to FIG. 3, when a wheeled-legged robot 301 needs to climb a staircase, the wheeled-legged robot may control an outer robotic leg set 302 (i.e., a first robotic leg set) and an inner robotic leg set 303 (i.e., a second robotic leg set) to swing alternately to complete staircase climbing. For example, first, the outer robotic leg set 302 is used as a stance robotic leg set and the inner robotic leg set 303 is used as a swinging robotic leg set to cause the robot 301 to climb up a first step. Then the inner robotic leg set 303 is used as a stance robotic leg set and the outer robotic leg set 302 is used as a swinging robotic leg set to cause the robot 301 to climb up a second step. The outer robotic leg set 302 and the inner robotic leg set 303 swing alternately in sequence, to complete the staircase climbing task.

In all embodiments, referring to FIG. 4, when a wheeled-legged robot 401 needs to cross a road shoulder, the wheeled-legged robot may control an outer robotic leg set 402 and an inner robotic leg set 403 to swing alternately to complete the road shoulder crossing. For example, first, the inner robotic leg set 403 is used as a stance robotic leg set and the outer robotic leg set 402 is used as a swinging robotic leg set to cause the outer robotic leg set 402 of the robot 401 to climb up the road shoulder. Then the outer robotic leg set 402 is used as a stance robotic leg set and the inner robotic leg set 403 is used as a swinging robotic leg set to cause the whole robot 401 to cross the road shoulder. The inner robotic leg set 403 and the outer robotic leg set 402 swing alternately in sequence, to complete the road shoulder crossing task.

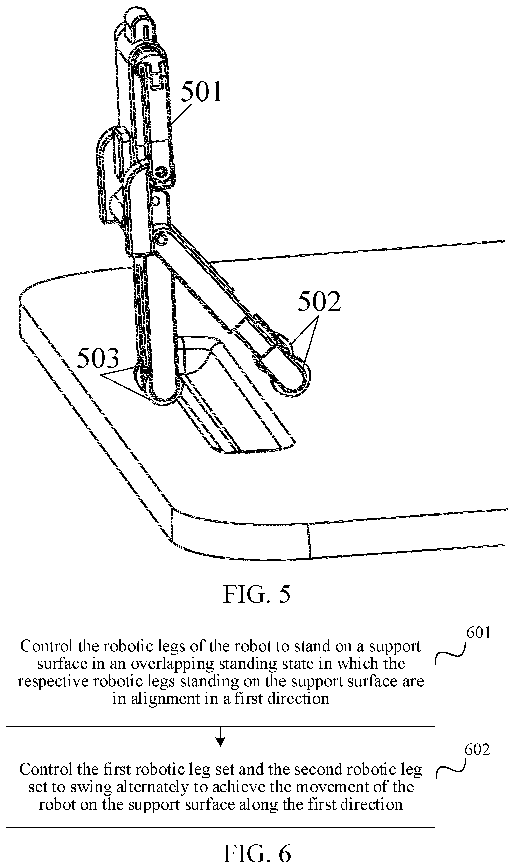

In all embodiments, referring to FIG. 5, when a wheeled-legged robot 501 needs to cross a pit, the wheeled-legged robot may control an outer robotic leg set 502 and an inner robotic leg set 503 to swing alternately to complete the pit crossing. For example, first, the inner robotic leg set 503 is used as a stance robotic leg set and the outer robotic leg set 502 is used as a swinging robotic leg set to cause the outer robotic leg set 502 of the robot 501 to cross the pit. Then the outer robotic leg set 502 is used as a stance robotic leg set and the inner robotic leg set 503 is used as a swinging robotic leg set to cause the whole robot 501 to cross the pit. The inner robotic leg set 503 and the outer robotic leg set 502 swing alternately in sequence, to complete the pit crossing task.

The robot control method provided in the embodiments of this disclosure are described below by using method embodiments.

FIG. 6 is a flowchart of a robot control method according to an embodiment of this disclosure. In this embodiment of this disclosure, the robot control method is described by using an example in which each step is performed by a robot. The method may include at least one of the following operations (601-602).

Operation 601: control the robotic legs of the robot to stand on a support surface in an overlapping standing state, wherein in the overlapping standing state, the respective robotic legs standing on the support surface are in alignment in a first direction.

In all embodiments, the overlapping standing state may be an initial state of the robot, and may be configured for indicating an initial state of the robot when moving on a support surface. For example, the overlapping standing state may indicate that robotic legs of the robot overlap in the first direction. For example, a world coordinate system of the robot is constructed by using a contact point between a foot of the robot in the initial state and the support surface as an origin, a horizontal direction as an x-axis direction, a vertical direction as a z-axis direction, and a direction perpendicular to both the horizontal direction and the vertical direction as a y-axis direction. The robotic legs of the robot in the overlapping standing state have the same coordinate in the x-axis direction. In other words, position derivation among the respective robotic legs of the robot in the overlapping standing state in the x-axis direction is zero. If the robot is viewed from the y-axis direction, only one outermost robotic leg can be observed. The position derivations may be derivations among positions of feet corresponding to the robotic legs in the world coordinate system. The robot in this embodiment of this disclosure is the same as that in the foregoing embodiment, which is not described in detail herein.

In all embodiments, the overlapping standing state may be configured for defining lengths of the robotic legs, a position relationship between the robotic legs and a waist, a position relationship between the robotic legs and the support surface, and the like of the robot in the initial state. For example, the robot in the overlapping standing state stands vertically on the support surface.

In all embodiments of this disclosure, the first direction may be a forward-moving direction of the robot. For example, the first direction may be a horizontal direction parallel to the support surface, or may be a vertical direction perpendicular to the support surface, or may be the corresponding x-axis direction of the world coordinate system of the robot. This is not limited in this embodiment of this disclosure.

In all embodiments of this disclosure, the foregoing support surface may include only one plane, such as a flat ground or a road, or may include a plurality of planes at different heights, such as a staircase, a road surface with a road shoulder, and a ground with a pit. This is not limited in this embodiment of this disclosure.

In all embodiments, the initial state of the robot may be set and adjusted based on an actual use requirement. For example, the initial state of the robot may be a four-feet stance state or a dual-feet stance state. This is not limited in this embodiment of this disclosure.

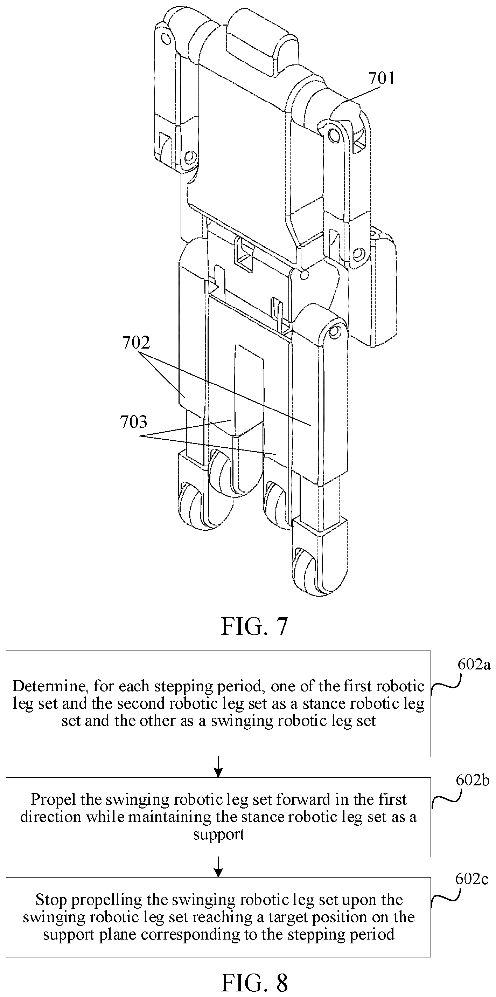

Exemplarily, referring to FIG. 7, a wheeled-legged robot 701 is in an overlapping standing state. The wheeled-legged robot stands on a support surface by using two outer robotic legs in an outer robotic leg set 702 (i.e., a first robotic leg set) as stance robotic legs, with two inner robotic legs in an inner robotic leg set 703 (i.e., a second robotic leg set) being not in contact with the support surface. In all embodiments, the two inner robotic legs in the inner robotic leg set 703 may be in contact with the support surface. The four robotic legs of the robot 701 are in an overlapped state in a direction. In other words, in the direction, a position derivation among the four robotic legs of the robot 701 is zero.

Operation 602: Control the first robotic leg set and the second robotic leg set to swing alternately to achieve a movement of the robot on the support surface along the first direction.

In all embodiments of this disclosure, swinging of a robotic leg may mean a process of rotating the robotic leg by using a hip joint of the robotic leg as a fixed point, which is equivalent to rotating the robotic leg corresponding to the hip joint through the hip joint. In all embodiments, during swinging of a robotic leg, a length of the robotic leg may be adjusted based on an actual use requirement, and a position of a hip joint corresponding to the robotic leg in a world coordinate system may also be adjusted based on an actual use requirement. This is not limited in this embodiment of this disclosure.

The swinging of the first robotic leg set means swinging of the robotic legs in the first robotic leg set, and the swinging of the second robotic leg set means swinging of the robotic legs in the second robotic leg set. The alternate swinging of the first robotic leg set and the second robotic leg set means alternate swinging of the robotic legs in the first robotic leg set and the robotic legs in the second robotic leg set.

For example, the robot stops moving after n stepping periods. In this case, for an $i^{th}$ stepping period and an $(i+1)^{th}$ stepping period in the n stepping periods adjacent to each other, if the first robotic leg set swings in the $i^{th}$ stepping period, the second robotic leg set swings in the $(i+1)^{th}$ stepping period; and if the second robotic leg set swings in the $i^{th}$ stepping period, the first robotic leg set swings in the $(i+1)^{th}$ stepping period. In all embodiments, when the first robotic leg set swings, the second robotic leg set may be a stance robotic leg set; and when the second robotic leg set swings, the first robotic leg set may be a stance robotic leg set. The stance robotic leg set is a robotic leg set configured to cause the robot to stand on the support surface.

The stepping period is configured for indicating a duration for the first robotic leg set or the second robotic leg set to complete one swing, and the n stepping periods may be the same. A step amplitude of the first robotic leg set or the second robotic leg set in a stepping period is a step length. For example, a movement distance of the first robotic leg set or the second robotic leg set in the first direction in a stepping period may be recorded as a step length. The step length may be set and adjusted based on an actual use requirement, or may be a fixed value. This is not limited in this embodiment of this disclosure. n is a positive integer.

In all embodiments, because the first robotic leg set and the second robotic leg set may be controlled by using the same method in each stepping period, a description is provided below by using any one of the n stepping periods as an example. Referring to FIG. 8, operation 602 may further include the following content:

Operation 602a: Determine, for each stepping period, one of the first robotic leg set and the second robotic leg set as a stance robotic leg set and the other as a swinging robotic leg set.

The swinging robotic leg set is a robotic leg set configured to cause the robot to move in the first direction. In all embodiments of this disclosure, the robotic legs in the stance robotic leg set or the swinging robotic leg set may be of the same type. To be specific, the robotic legs in the stance robotic leg set or the swinging robotic leg set all may be robotic legs in the first robotic leg set, or may be robotic legs in the second robotic leg set. For example, if the first robotic leg set is the stance robotic leg set, the second robotic leg set is the swinging robotic leg set. If the second robotic leg set is the stance robotic leg set, the first robotic leg set is the swinging robotic leg set.

In all embodiments, the stepping period may include a swing phase and a stance phase, a robotic leg in the swing phase is in a swinging state, and a robotic leg in the stance phase is in a stance state. The robotic leg in the swinging state is not in contact with the support surface, and the robotic leg completes one swing in the swing phase. The robotic leg in the stance state is in contact with the support surface, and the robotic leg completes switching between a swinging robotic leg and a stance robotic leg in the stance phase. The stance phase follows the swing phase.

In all embodiments, in the same stepping period, a swing phase of the stance robotic leg set may be zero, in other words, the stance robotic leg set may be in the stance state, and the swinging robotic leg set may be first in the swinging state and then in the stance state.

Exemplarily, in the same stepping period, a process of determining the stance robotic leg set and the swinging robotic leg set may be as follows:

1. Gait information of the robot is obtained based on the n stepping periods and a stance phase duty ratio of the robot.

The stance phase duty ratio is configured for indicating a ratio of a duration in which a swinging robotic leg of the robot is in the stance state in each stepping period. In all embodiments, in each stepping period, the stance robotic legs may be all in the stance state.

Exemplarily, the stepping period is denoted as T, and the stance phase duty ratio is $\alpha$, $\in [0, 1)$. In this case, the swing phase of the swinging robotic leg in a stepping period is $T_{swing} = (1 - \alpha) T$, and the stance phase is $T_{stance} = \alpha T$. In all embodiments, the stepping period and the stance phase duty ratio may be preset parameters in the robot, or may be parameters automatically adjusted by the robot based on a real environment. This is not limited in this embodiment of this disclosure.

The gait information is configured for indicating whether the robotic leg of the robot is a swinging robotic leg in each stepping period, and may be configured for instructing the first robotic leg set and the second robotic leg set of the robot to swing alternately. In all embodiments, for each stepping period, if a swing phase of a robotic leg is a non-zero value, it may be determined that the robotic leg is a swinging robotic leg. If a swing phase of a robotic leg is a zero value, it may be determined that the robotic leg is a stance robotic leg.

Gait information of each robotic leg may be expressed as a time sequence of a stance state and a swinging state. Exemplarily, the stance state is set to 1, the swinging state is set to 0, the first robotic leg set includes robotic legs $c_1$ and $c_2$, and the second robotic leg set includes robotic legs $c_3$ and $c_4$. If the robot makes a first step with the second robotic leg set, a gait of each robotic leg at a time t may be expressed as follows:

$$c_1, c_2 = \begin{cases} 1, \text{n being an odd number} \\ 0, \text{n being an even number and } nT \leqslant t \leqslant (n+1) T - \alpha T \end{cases};$$

$$c_3, c_4 = \begin{cases} 1, \text{n being an even number} \\ 0, \text{n being an odd number and } nT \leqslant t \leqslant (n+1) T - \alpha T \end{cases}.$$

n = floor (t/T) represents a current step count (i.e., a current stepping period).

If the robot makes a first step with the first robotic leg set, a gait of each robotic leg at the time t may be expressed as follows:

$$c_3, c_4 = \begin{cases} 1, \text{n being an odd number} \\ 0, \text{n being an even number and } nT \leqslant t \leqslant (n+1) T - \alpha T \end{cases};$$

$$c_1, c_2 = \begin{cases} 1, \text{n being an even number} \\ 0, \text{n being an odd number and } nT \leqslant t \leqslant (n+1) T - \alpha T \end{cases}.$$

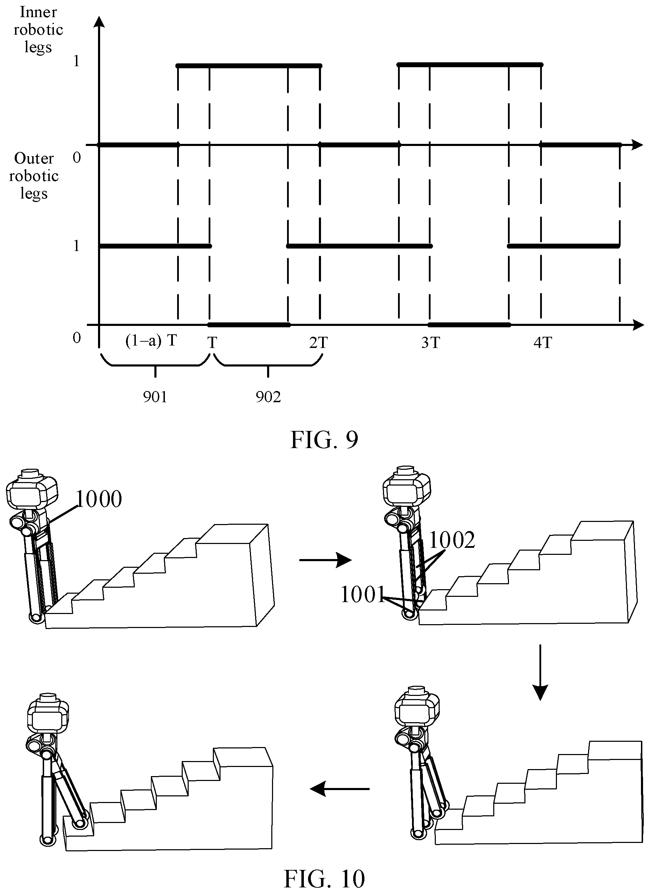

For example, referring to FIG. 9, if the robot makes a first step with the second robotic leg set, the gait information of the robot may be expressed by using a line diagram shown in FIG. 9. For a first stepping period 901, in the swing phase $T_{swing} = (1 - \alpha) T$, the second robotic leg set is in a swinging state, and the first robotic leg set is in a stance state; and in the stance phase $T_{stance} = \alpha T$, the second robotic leg set is in the stance state, and the first robotic leg set is also in the stance state. For a second stepping period 902, in the swing phase, the first robotic leg set is in the swinging state, and the second robotic leg set is in the stance state; and in the stance phase, the first robotic leg set is in the stance state, and the second robotic leg set is also in the stance state, and so on.

2. The stance robotic leg set and the swinging robotic leg set corresponding to the stepping period are determined from the first robotic leg set and the second robotic leg set based on the gait information.

In all embodiments of this disclosure, during the determining of the stance robotic leg set and the swinging robotic leg set corresponding to the stepping period, the gait information of the robot may be first obtained based on the stepping period and the stance phase duty ratio of the robot, and then the stance robotic leg set and the swinging robotic leg set corresponding to the stepping period may be determined based on the gait information. The manner of further determining the stance robotic leg set and the swinging robotic leg set based on the gait information achieves more proper determining of the stance robotic leg set and the swinging robotic leg set, which adapts to an actual operating status of the robot.

In all embodiments, it may be determined first whether a sequence number of a stepping period is an odd number or an even number, and then a stance robotic leg set and a swinging robotic leg set corresponding to the stepping period may be determined based on the gait information of the robot. For example, referring to FIG. 9, if the stepping period is the third stepping period of the n stepping periods, it may be determined that in the stepping period, the first robotic leg set is a stance robotic leg set, and the second robotic leg set is a swinging robotic leg set.

Operation 602b: propel the swinging robotic leg set forward in the first direction while maintaining the stance robotic leg set as a support.

The robot stands on the support surface through the stance robotic leg set, and rotates a hip joint corresponding to the swinging robotic leg set in the first direction to cause the swinging robotic leg set to swing in the first direction. The process occurs in the swing phase of the stepping period.

For example, referring to FIG. 3, the robot 301 stands on the support surface through a stance robotic leg set (i.e., the first robotic leg set 302), and rotates a hip joint corresponding to a swinging robotic leg set (i.e., the second robotic leg set 303) in the first direction, to cause the swinging robotic leg set to swing in the first direction, so as to climb up a first step of a staircase.

In all embodiments, the robotic legs in the first robotic leg set may move synchronously, and the robotic legs in the second robotic leg set may move synchronously. In other words, during stance of the stance robotic leg set, all of the stance robotic legs move synchronously, and during swinging of the swinging robotic leg set, all of the swinging robotic legs move synchronously.

In all embodiments, the body of the robot may keep vertical during movement of the robot. As shown in FIG. 3, the body of the robot 301 keeps vertical during the staircase climbing. To be specific, only each hip joint needs to be rotated to adjust a posture of the body of the robot, and a pitch joint, a sideway swing rotation joint, and the like are not rotated, which further reduces a robot control workload, thereby improving robot control efficiency.

In all embodiments, a leg length of each stance robotic leg in the stance robotic leg set may be extended during the swinging of the swinging robotic leg set in the first direction in the swing phase of the stepping period.

By increasing the leg length of each stance robotic leg in the stance robotic leg set, the robot can change a position of a center of mass of the robot in the second direction, so that the entire robot can cross an obstacle. For example, the entire robot can completely climb up all steps of the staircase. The second direction is a direction perpendicular to the first direction. For example, the first direction is a horizontal rightward direction, and the second direction may be a vertical upward direction.

During the swinging of the swinging robotic leg set, the leg length of each swinging robotic leg may be adjusted based on a real environment, for example, based on a condition that the robot needs to reach a desired position without colliding with a contact surface. The adjustment process is described in detail below, which is not described in detail herein.

Operation 602c: Stop propelling the swinging robotic leg set upon the swinging robotic leg set reaching a target position on the support surface corresponding to the stepping period.

In all embodiments of this disclosure, each stepping period may correspond to an initial position and a desired position. The initial position may be a position at which a swinging robotic leg starts swinging, and the desired position may be a position at which the swinging robotic leg stops swinging. The desired position corresponding to each stepping period may be determined based on a step length of the robot and size information of the support surface.

In all embodiments, for the $i^{th}$ stepping period and the $(i+1)^{th}$ stepping period in the n stepping periods adjacent to each other, a desired position of the $i^{th}$ stepping period may be used as an initial position of the $(i+1)^{th}$ stepping period. In other words, the initial position of the $(i+1)^{th}$ stepping period is the same as the desired position of the $i^{th}$ stepping period.

The target position may be a desired position at which a foot on the swinging robotic leg contacts the support surface. For example, when the robot has a wheel as a foot portion, the desired position may be a desired position at which a wheel on the swinging robotic leg contacts the support surface. When the robot has a foot as a foot portion, the desired position may be a desired position at which a foot on the swinging robotic leg contacts support surface.

After the swinging robotic leg set stops swinging, the robot enters the stance phase. When the stance phase is a non-zero value, the robot is in a four-feet stance state. When the stance phase is a zero value, the robot immediately alternates the swinging robotic leg set and the stance robotic leg set. In other words, during movement of the robot, the robot is always in a dual-feet stance state. In this way, robot movement efficiency can be further improved.

After a current stepping period ends, the robot enters a next stepping period, and the robot stops moving after the n stepping periods. For example, if the robot climbs up a staircase, crosses a road shoulder, crosses a pit, or the like after the n stepping periods, the robot may stop moving. In all embodiments, the robot may restore the foregoing overlapping standing state after stop moving.

In conclusion, in the technical solution provided in this embodiment of this disclosure, for the robot having the first robotic leg set and the second robotic leg set, because centers of rotation of hip joints corresponding to the first robotic leg set and the second robotic leg set are located on a same vertical plane, one robotic leg set may be caused to stand, and the other robotic leg set may be caused to swing, so that the robot quickly moves in a dynamic balanced state (to be specific, a center of gravity of the robot may exceed a stance area of the robot), thereby improving the robot movement efficiency. In addition, controlling the first robotic leg set and the second robotic leg set to swing alternately to control the robot to move can further improve the robot movement efficiency.

The center of gravity of the robot is a gravity concentration point of the robot, and the center of mass of the robot is a weighted average of a particle position with respect to a mass of the robot. If a gravity is equalized, the center of mass and the center of gravity may overlap. The stance area of the robot is an area defined by contact points between a foot on each robotic leg of the robot and the support surface. In the related art, a projection of a center of gravity needs to be controlled to be always in a stance area, resulting in a very small center-of-mass velocity of the robot and slow movement of the entire robot. However, in this embodiment of this disclosure, the center of gravity of the robot may exceed the stance area of the robot, so that movement of the entire robot is very quick, thereby improving the robot movement efficiency.

In addition, the stance phase in each stepping period of the robot is set to a zero value, so that the robot can control the first robotic leg set and the second robotic leg set to continuously swing alternately without stopping, thereby further improving the robot movement efficiency.

In addition, arranging the hip joints of the robot to be coaxial, controlling the robotic legs in the first robotic leg set to move synchronously, and controlling the robotic legs in the second robotic leg set to move synchronously can reduce robot control difficulty, thereby improving robot control efficiency.

In some embodiments, referring to FIG. 10 to FIG. 12, the technical solution provided in this embodiment of this disclosure is described by using an example in which a quadruped wheeled-legged robot climbs a staircase. The technical solution may include the following content:

An initial state in which a quadruped wheeled-legged robot 1000 climbs a staircase is an overlapping standing state, which means that four robotic legs of the quadruped wheeled-legged robot 1000 in the initial state are synchronously closed together in a forward-moving direction (for example, a horizontal rightward direction).

In a first stepping period (refer to FIG. 10), the quadruped wheeled-legged robot 1000 swings an inner robotic leg set 1002 (i.e., a second robotic leg set) in the forward-moving direction by using an outer robotic leg set 1001 (i.e., a first robotic leg set) as a support, so that the quadruped wheeled-legged robot 1000 climbs up a first step of a staircase.

For two inner robotic legs in the inner robotic leg set 1002, the two inner robotic legs are controlled to swing synchronously in the forward-moving direction through hip joints corresponding to the two inner robotic legs, and leg lengths of the two inner robotic legs are reduced synchronously, so that the two inner robotic legs are both higher than the first step and do not contact the first step. Then the two inner robotic legs are controlled to further swing synchronously in the forward-moving direction through the hip joints corresponding to the two inner robotic legs, and the leg lengths of the two inner robotic legs are increased synchronously, so that the inner robotic leg set 1002 reaches a desired position on the first step. In the process, the two outer robotic legs in the outer robotic leg set 1001 are adaptively stretched synchronously, and a body of the quadruped wheeled-legged robot 1000 keeps vertical.

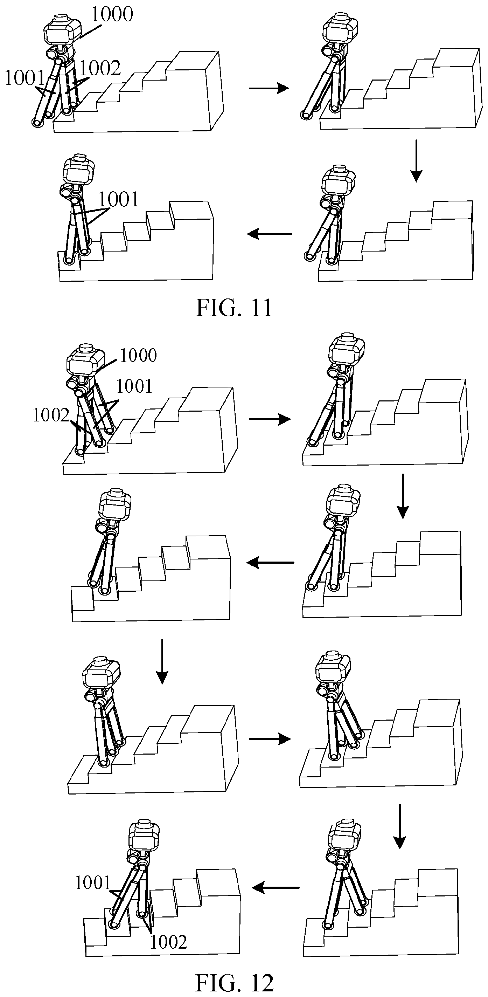

In a second stepping period (refer to FIG. 11), the quadruped wheeled-legged robot 1000 swings the outer robotic leg set 1001 in the forward-moving direction while maintaining the inner robotic leg set 1002 as a support, so that the quadruped wheeled-legged robot 1000 climbs up a second step of the staircase.

For two outer robotic legs in the outer robotic leg set 1001, the two outer robotic legs are controlled to swing synchronously in the forward-moving direction through hip joints corresponding to the two outer robotic legs, and leg lengths of the two outer robotic legs are reduced synchronously, so that the two outer robotic legs are both higher than the first step and do not contact the first step. Then the two outer robotic legs are controlled to swing synchronously in the forward-moving direction through the hip joints corresponding to the two outer robotic legs, and the leg lengths of the two outer robotic legs are reduced synchronously, so that the two outer robotic legs are both higher than a second step and do not contact the second step, and finally the two outer robotic legs are controlled to further swing synchronously in the forward-moving direction through the hip joints corresponding to the two outer robotic legs, and the leg lengths of the two outer robotic legs are increased synchronously, so that the outer robotic leg set 1001 reaches a desired position on the second step. In the process, the two inner robotic legs in the inner robotic leg set 1002 are adaptively stretched synchronously, and the body of the quadruped wheeled-legged robot 1000 keeps vertical, and vertically moves in the forward-moving directions as the two inner robotic legs are stretched, to adjust a center of mass of the quadruped wheeled-legged robot 1000.

In a third stepping period (refer to FIG. 12), the quadruped wheeled-legged robot 1000 swings the inner robotic leg set 1002 in the forward-moving direction while maintaining the outer robotic leg set 1001 as a support, so that the quadruped wheeled-legged robot 1000 climbs up a third step of the staircase.

For the two inner robotic legs in the inner robotic leg set 1002, the two inner robotic legs are controlled to swing synchronously in the forward-moving direction through the hip joints corresponding to the two inner robotic legs, and leg lengths of the two inner robotic legs are reduced synchronously, so that the two inner robotic legs are both higher than the second step and do not contact the second step. Then the two inner robotic legs are controlled to swing synchronously in the forward-moving direction through the hip joints corresponding to the two inner robotic legs, and the leg lengths of the two inner robotic legs are reduced synchronously, so that the two inner robotic legs are both higher than a third step and do not contact the third step, and finally the two inner robotic legs are controlled to further swing synchronously in the forward-moving direction through the hip joints corresponding to the two inner robotic legs, and the leg lengths of the two inner robotic legs are increased synchronously, so that the inner robotic leg set 1002 reaches a desired position on the third step. In the process, the two outer robotic legs in the outer robotic leg set 1001 are adaptively stretched synchronously, and the body of the quadruped wheeled-legged robot 1000 keeps vertical, and vertically moves in the forward-moving directions as the two outer robotic legs are stretched, to adjust a center of mass of the quadruped wheeled-legged robot 1000.

In subsequent stepping periods, the inner robotic leg set 1002 and the outer robotic leg set 1001 swing interactively, so that the quadruped wheeled-legged robot 1000 climbs up the staircase.

In conclusion, in the technical solution provided in this embodiment of this disclosure, for the quadruped wheeled-legged robot having the inner robotic leg set and the outer robotic leg set, because centers of rotation of the hip joints corresponding to the inner robotic leg set and the outer robotic leg set are located on a same vertical plane, one robotic leg set may be caused to stand, and the other robotic leg set may be caused to swing, so that the robot quickly climb the staircase in a dynamic balanced state (to be specific, a center of gravity of the robot may exceed a stance area of the robot), thereby improving the robot movement efficiency. In addition, controlling the inner robotic leg set and the outer robotic leg set to swing alternately to control the robot to climb the staircase can further improve staircase climbing efficiency of the robot.

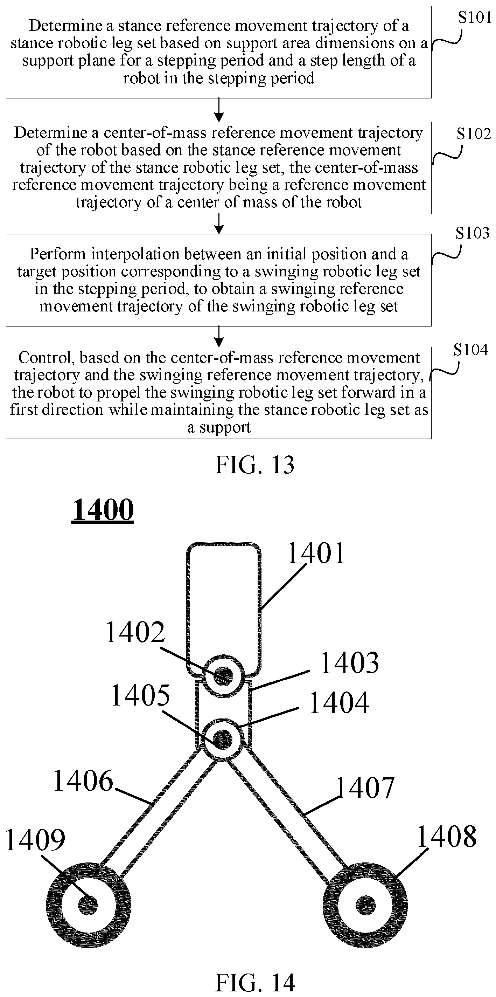

In all embodiments, referring to FIG. 13, the foregoing operation 602b "propel the swinging robotic leg set forward in the first direction while maintaining the stance robotic leg set as a support" may further include the following content: Operation S101: Determine a stance reference movement trajectory of the stance robotic leg set based on support area dimensions on the support surface for the stepping period and a step length of the robot in the stepping period.

In all embodiments, because the robot moves in a step-by-step (i.e., swing) manner, the support surface may be divided into different areas based on a stop point of each step of the robot. In all embodiments, when the support surface has a plurality of areas, a desired position (i.e., a step length) corresponding to each stepping period may be determined based on size information of the plurality of areas.

Exemplarily, when the support surface is a staircase, the staircase has a plurality steps, each step corresponds to an area, and each stepping period is configured for climbing up one step, the size information may be size information of each step, such as a length, a width, and a height of the step. In all embodiments, the size information may further include a total quantity of the steps of the staircase.

The stance reference movement trajectory may be a desired movement trajectory of a stance robotic leg. The stance reference movement trajectory may be a position sequence formed by a desired position corresponding to each stepping period, and is configured for guiding a stance robotic leg set of the robot to move. For example, the n stepping periods correspond to n desired positions, and the n desired positions and the initial position of the robot are sorted in chronological order, to obtain the stance reference movement trajectory. For control times t in swing phases of a same stepping period, desired positions corresponding to the control times t are the same. In all embodiments, the stance reference movement trajectory may be represented by using a desired movement trajectory of a foot corresponding to a stance robotic leg.

In all embodiments, because the robot may move in the first direction (for example, generates no displacement in the y-axis direction of the world coordinate system), the robotic legs in the stance robotic leg set may move synchronously, the robotic legs in the swinging robotic leg set may move synchronously, and the hip joints of the robot may be coaxial, the robot may be simplified into a plane model in a sagittal plane (for example, a sagittal plane in FIG. 2).

For example, FIG. 14 illustrates a plane model 1400 of a wheeled-legged robot in a sagittal plane. The plane model 1400 includes a body 1401, the body 1401 is connected to a waist 1403 through a waist joint 1402 (corresponding to the foregoing sideway swing rotation center and pitch rotation center), the waist 1403 is connected to an outer robotic leg 1406 and an inner robotic leg 1407 through a hip 1404, a hip joint 1405 of the hip 1404 is configured to rotate the outer robotic leg 1406 and the inner robotic leg 1407, a foot of each of the outer robotic leg 1406 and the inner robotic leg 1407 is a wheel 1408, and a wheel joint 1409 is provided on the wheel 1408.

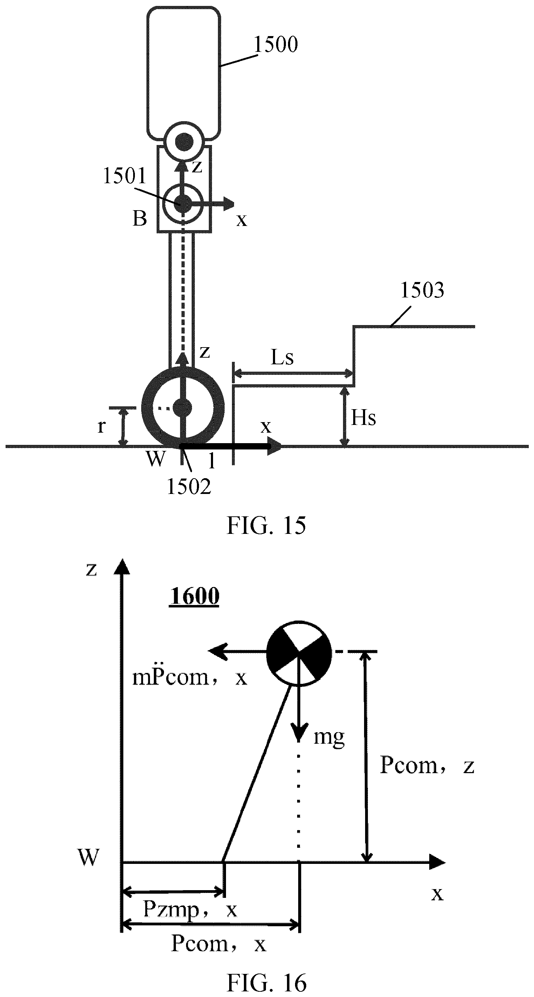

Exemplarily, referring to FIG. 15, taking the quadruped wheeled-legged robot climbing a staircase as an example, a process of obtaining the stance reference movement trajectory of the stance robotic leg set may be as follows: A world coordinate system W-xyz corresponding to the quadruped wheeled-legged robot is constructed based on a plane model 1500 of the quadruped wheeled-legged robot and a staircase 1503. The world coordinate system is constructed by using an initial contact point 1502 between the plane model 1500 and the staircase 1503 as an origin, a first direction (i.e., a forward-moving direction) as an x-axis direction, and a second direction (i.e., a vertical direction) perpendicular to the first direction as a z-axis direction.

The initial contact point 1502 may alternatively be a projection of a center of gravity of the quadruped wheeled-legged robot in an initial state on the ground.

Then, a floating base coordinate system B-xyz of the quadruped wheeled-legged robot is constructed by using a hip joint 1501 of the plane model 1500 as an origin. The floating base coordinate system is fixedly connected to the hip joint 1501, in other words, moves as the hip joint 1501 moves. An initial direction of each coordinate axis of the floating base coordinate system is the same as that of the world coordinate system. In all embodiments, the floating base coordinate system may alternatively be fixedly connected to a torso of the quadruped wheeled-legged robot. This is not limited in this embodiment of this disclosure. In all embodiments, the following calculations may all occur in the world coordinate system and the floating base coordinate system.

In the world coordinate system, an initial position of the stance robotic leg may be represented as (0, 0, 0), i.e., a first reference point in the stance reference movement trajectory. It is assumed that a length of each step on the staircase 1503 is Ls, a height of each step is Hs, a distance between the initial position of the stance robotic leg and a first step is I, and a step length of the quadruped wheeled-legged robot in each stepping period is a length of a step corresponding to the stepping period. In this case, the stance reference movement trajectory may be expressed as follows:

$$
P_{stance}(t) = \begin{bmatrix} \sum_{j=1}^{n} L_{s,j} \\ 0 \\ r + \sum_{j=1}^{n} H_{s,j} \end{bmatrix}.
$$

n = floor (t/T) represents a current step count (i.e., a current stepping period), t is a control time, r is a radius of a wheel, $L_{s,j}$ is a step length corresponding to a $j^{th}$ stepping period (i.e., a length of the $j^{th}$ step), and $H_{s,j}$ is a height of the $j^{th}$ step. Because the quadruped wheeled-legged robot climbs the staircase only on a sagittal plane, movement in the y-axis direction does not need to be considered. Therefore, a position value in the y-axis direction is set to be 0. In all embodiments, $L_{s,j}$ may be greater than I.

Operation S102: Determine a center-of-mass reference movement trajectory of the robot based on the stance reference movement trajectory of the stance robotic leg set, the center-of-mass reference movement trajectory being a reference movement trajectory of a center of mass of the robot.

In all embodiments of this disclosure, a height between the center of mass of the robot and a foot of the stance robotic leg of the robot may be set to a constant value, i.e., the following constant height. The constant height may be a distance between the center of mass of the robot and a center of the foot corresponding to the stance robotic leg (for example, a wheel center) in the z-axis direction, which is denoted as $H_{com}$.

In all embodiments, the center-of-mass reference movement trajectory of the robot may be planned in a first direction and a second direction, and the second direction is perpendicular to the first direction. In this case, a process of obtaining the center-of-mass reference movement trajectory may include the following content:

1. A center-of-mass reference movement trajectory of the robot in the second direction is obtained based on the stance reference movement trajectory, a stance phase duty ratio, and the constant height of the center of mass of the robot relative to the foot of the stance robotic leg set.

The center-of-mass reference movement trajectory is configured for guiding the center of mass of the robot to move. The stance phase duty ratio indicates a percentage of time a swinging robotic leg of the robot maintains in the stance state in each stepping period.

In all embodiments, in the swing phase, the center-of-mass reference movement trajectory in the second direction may be obtained through interpolation of an initial position and an end position in the stance reference movement trajectory in combination with the constant height. In the stance phase, the center-of-mass reference movement trajectory in the second direction may be determined based on the end position in the stance reference movement trajectory and the constant height.

An initial position and an end position in a stance reference movement trajectory corresponding to the current stepping period are respectively a reference position of the stance robotic leg in the current stepping period and a reference position of a stance robotic leg in a next stepping period of the current stepping period. For the second direction, the initial position is a position component of the reference position of the stance robotic leg in the current stepping period in the second direction (i.e., the z-axis direction), and the end position is a position component of the reference position of the stance robotic leg in the next stepping period of the current stepping period in the second direction (i.e., the z-axis direction).

For example, in the swing phase of the $n^{th}$ stepping period, the center-of-mass reference movement trajectory in the second direction is interpolated to a reference position of the stance robotic leg in the $(n+1)^{th}$ stepping period based on a reference position of the stance robotic leg in the $n^{th}$ stepping period. In the stance phase of the $n^{th}$ stepping period, a reference position of the center of mass in the second direction remains unchanged. In this case, the center-of-mass reference movement trajectory of the robot in the second direction may be expressed as follows:

$$P_{com,z}(t) = \begin{cases} \text{Spline}\left(P_{stance,z}(nT)+H_{com}, P_{stance,z}((n+1)T)+H_{com}, (1-\alpha)T\right), \text{Swing period} \\ P_{stance,z}((n+1)T)+H_{com}, \text{Stance period} \end{cases}$$

$P_{com,z}(t)$ represents a reference position of the center of mass of the robot in the second direction at a control time t, $P_{stance,z}(nT) + H_{com}$ is an initial position of the center of mass in the $n^{th}$ stepping period (i.e., a sum of the position component of the reference position of the stance robotic leg in the $n^{th}$ stepping period in the z-axis direction and the constant height), $P_{stance,z}((n+1)T) + H_{com}$ is an end position of the center of mass in the $n^{th}$ stepping period (i.e., a sum of the position component of the reference position of the stance robotic leg in the $(n+1)^{th}$ stepping period in the z-axis direction and the constant height), Spline () is a spline interpolation method, such as a cubic spline interpolation method or any interpolation method that can ensure that velocities at a start time and an end time of the reference movement trajectory and an acceleration are zero and a start position and an end position satisfy constraints. Spline () is configured for performing interpolation on an initial position of the center of mass and an end position of the center of mass in the swing phase in the $n^{th}$ stepping period.

Each control time in the swing phase of the $n^{th}$ stepping period may be denoted as $nT \le t \le (n+1)T-\alpha T$. Each control time in the stance phase of the $n^{th}$ stepping period may be denoted as $(n+1)T - \alpha T \le t \le (n+1)T$.

2. A zero moment point (ZMP) reference trajectory of the robot is determined based on the stance reference movement trajectory and the stance phase duty ratio.

In all embodiments of this disclosure, a ZMP corresponding to a stepping period may be a contact point (which is referred to as a stance contact point below) between a foot of a stance robotic leg and the support surface corresponding to the stepping period, and a ZMP reference trajectory includes a plurality of ZMPs sorted in chronological order during movement of the robot.

In all embodiments, because the ZMP is the same as the stance contact point, in the swing phase, the ZMP reference trajectory may be the same as a stance contact point reference trajectory, in other words, remains unchanged. In the stance phase, the stance contact point needs to be switched from a stance contact point in the current stepping period to a stance contact point in the next stepping period of the current stepping period. In this case, a ZMP reference trajectory in the stance phase may be obtained through an interpolation method.

Exemplarily, in the swing phase, the ZMP reference trajectory is the same as a reference trajectory of a contact point between the stance robotic leg set and the support surface, and in the stance phase, the ZMP reference trajectory is obtained through interpolation of the initial position and the end position in the stance reference movement trajectory. In this case, the ZMP reference trajectory may be expressed as follows:

$$P_{zmp}(t) = \begin{cases} P_{stance}(nT), \ nT \le t \le (n+1)T-\alpha T \\ \text{Spline}\left(P_{stance}(nT), P_{stance}((n+1)T), \alpha T\right), \ (n+1)T-\alpha T \le t \le (n+1)T \end{cases}$$

$P_{zmp}(t)$ represents a reference position of a ZMP of the robot at the control time t, $P_{stance}(nT)$ is the reference position of the stance robotic leg in the $n^{th}$ stepping period, $P_{stance}((n+1)T)$ is the reference position of the stance robotic leg in the $(n+1)^{th}$ stepping period, **Spline** () is a spline interpolation method, such as a cubic spline interpolation method or any interpolation method that can ensure that velocities at a start time and an end time of the reference movement trajectory and an acceleration are zero and a start position and an end position satisfy constraints. Spline () is configured to perform, in the stance phase, interpolation on the reference position of the stance robotic leg in the $n^{th}$ stepping period and the reference position of the stance robotic leg in the $(n+1)^{th}$ stepping period.

3. A center-of-mass reference movement trajectory of the robot in the first direction is determined based on the ZMP reference trajectory.

In all embodiments, the center-of-mass reference movement trajectory in the first direction may be configured for guiding the center of mass of the robot to move in the first direction, and the center-of-mass reference movement trajectory in the first direction may be a sequence of position components of the center of mass in the first direction sorted in chronological order during the movement of the robot.

In all embodiments, a movement process of the center of mass of the robot in the first direction may be simplified into an inverted pendulum model. For example, referring to FIG. 16, a quadruped wheeled-legged robot may be simplified into an inverted pendulum model 1600, m being a total mass of the robot, $P_{com,x}$ being a position of a center of mass in the first direction (i.e., the x-axis direction) in the world coordinate system, $P_{zmp,x}$ being a position of a ZMP in the first direction in the world coordinate system, and $P_{com,z}$ being a position of the center of mass in the second direction (i.e., the z-axis direction) in the world coordinate system.

The center-of-mass reference movement trajectory of the robot in the first direction may be a sequence formed by $P_{com,x}$ at each control time.

For example, $P_{com,x}$ at each control time may be calculated based on singular linear quadratic regulator (SLQR) control. The SLQR control is a variation of linear quadratic regulator (LQR) control. An objective function of the SLQR is still a quadratic function. The SLQR control is similar to the LQR control, except that a quadratic weight of a control variable thereof is constantly 0. An advantage of using the SLQR control is that using a Riccati equation to calculate a feedback coefficient in the LQR control is avoided. Instead, the feedback coefficient may be directly calculated through value iteration, which significantly reduces a calculation amount and improves calculation efficiency. The process may specifically include the following content:

1). A state variable of a discrete-time state equation of the robot is constructed by using a ZMP position, a center-of-mass of the robot in the first direction, and a center-of-mass velocity of the robot in the first direction.

For each control time, a state variable at the control time is constructed based on the ZMP position at the control time, the position of the center of mass in the first direction, and the speed of the center of mass in the first direction. For example, the state variable at each control time may be expressed as follows:

$$\mathbf{x} = \left[ \mathbf{P}_{zmp,\,x} \, , \; \mathbf{P}_{com,\,x} \, , \; \dot{\mathbf{P}}_{com,\,x} \right]$$

The discrete-time state equation of the robot may be expressed as follows:

$$\mathbf{x}\,(\mathbf{k}+1) = \mathbf{A}\mathbf{x}\,(\mathbf{k}) + \mathbf{B}\mathbf{u}\,(\mathbf{k})\,;$$

$$\mathbf{y}\,(\mathbf{k}) = \mathbf{C}\mathbf{x}\,(\mathbf{k})\,;$$

$$\mathbf{A} = \begin{bmatrix} 1 & 0 & 0 \\ 0 & 1 & \mathbf{t_c} \\ -\mathbf{a}^2\mathbf{t_c} & \mathbf{a}^2\mathbf{t_c} & 1 \end{bmatrix}, \; \mathbf{B} = \begin{bmatrix} \mathbf{t_c} \\ 0 \\ 0 \end{bmatrix}, \; \mathbf{C} = \begin{bmatrix} 0 & 1 & 0 \end{bmatrix}$$

x (k + 1) is a state variable at a time k+1 in discrete times, $t_c$ represents a control period (i.e., a time the regulator is run each time), $a = \sqrt{g/P_{com,\,z}}$ is a constant, and y (k) is $P_{zmp,\,x}$ at a time k, which is an unnecessary calculation.

2). An objective function is constructed based on a reference position of the ZMP in the ZMP reference trajectory through the SLQR control method.

For example, the objective function may be expressed as follows:

$$\mathbf{J} = \sum_{\mathbf{j}=1}^{\infty} \{ \mathbf{Q}\, [\, \mathbf{P}_{zmp,\,x}^{ref}\,(\mathbf{j}) - \mathbf{P}_{zmp,\,x}\,(\mathbf{j})\,]^{\,2} + \mathbf{R}\mathbf{u}^2\,(\mathbf{j}) \}$$

$P^{ref}_{zmp, x}$ represents a reference position of the ZMP in the first direction at a time j, $P_{zmp, x}$ represents an actual position of the ZMP in the first direction at the time j, and u (j) represents $\dot{P}_{zmp, x}$ at the time j.

3). A feedback gain matrix is determined based on the objective function.

In all embodiments, an input weight R of the objective function may be directly set to 0, to obtain the feedback gain matrix, which is as follows:

$$K = \left[ \frac{1 + \alpha T}{T} + \frac{\alpha}{1 + \alpha T} \quad -\frac{2 + \alpha T}{T} \quad -\frac{2 + \alpha T}{\alpha T} \right] .$$

4). A control variable of the discrete-time state equation is constructed based on the feedback gain matrix, the center-of-mass of the robot in the first direction, and the reference position of the ZMP in the ZMP reference trajectory.

In all embodiments, the control variable of the discrete-time state equation may be an output of the SLQR controller. In this case, the control variable may be expressed as:

$$u (k) = -K P_{com, x} (k) + \sum_{j=1}^{N_p} G^*_p (j) P^{ref}_{zmp, x} (k + j) .$$

u (k) is a control variable at the time k, $G^*_p (j) = \frac{\delta_j}{T} - \frac{\alpha (2 + \alpha T)}{(1 + \alpha T)^{j+1}}$, $\delta_j$ is an impulse function, which has a value of 1 at an initial time and has a value of 0 at other times, $N_p$ is a prediction time in a unit control period, and

$P^{ref}_{zmp, x} (k + j)$ is a reference position of the ZMP in the ZMP reference trajectory at a time k+j.

5). The state variable and the control variable are substituted into the discrete-time state equation, to obtain the center-of-mass reference movement trajectory of the robot in the first direction through iteration.

In all embodiments, for each control time, the state variable and the control variable may be inputted into the discrete-time state equation, to obtain x (k) at each control time through iteration, so as to obtain y (k) at each control time, i.e., $P_{com,x}$ at each control time, which may be sorted in chronological order to obtain the center-of-mass reference movement trajectory of the robot in the first direction.

In all embodiments, $P_{com,x}$ at each control time may be calculated through the LQR control in this embodiment of this disclosure. For example, the robot is described as a linear quadratic (LQ) problem, then an iterative equation calculation is performed to obtain an output of a linear system, which is used as a control quantity of the robot to cause the robot to reach a stable state, and $P_{com,x}$ at each control time is calculated. This is not limited in this embodiment of this disclosure.

In all embodiments of this disclosure, during the determining of the center-of-mass reference movement trajectory of the robot in the first direction, the state variable of the discrete-time state equation of the robot may be first constructed, then the objective function may be constructed, the feedback gain matrix may be further determined, and the control variable of the discrete-time state equation may be constructed, and finally, the state variable and the control variable may be input into the state equation to obtain the center-of-mass reference movement trajectory in the first direction. Through the method for determining a center-of-mass reference movement trajectory provided in this embodiment of this disclosure, detailed control variables and state variables are constructed, which improves accuracy of the obtained center-of-mass movement reference trajectory.

4. The center-of-mass reference movement trajectory of the robot is determined based on the center-of-mass reference movement trajectory of the robot in the second direction and the center-of-mass reference movement trajectory of the robot in the first direction.

In all embodiments of this disclosure, the determining of the center-of-mass reference movement trajectory of the robot may include two parts, i.e., determining the center-of-mass reference movement trajectory of the robot in the first direction and determining the center-of-mass reference movement trajectory of the robot in the second direction. Determining the center-of-mass reference movement trajectory of the robot based on the two parts improves accuracy of the determined center-of-mass reference movement trajectory, thereby facilitating subsequent precise control of the robot.

In all embodiments, the center-of-mass reference movement trajectory may be a combination of the center-of-mass reference movement trajectory of the robot in the second direction and the center-of-mass reference movement trajectory of the robot in the first direction.

Operation S103: Perform interpolation between an initial position and a target position corresponding to the swinging robotic leg set in the stepping period, to obtain a swinging reference movement trajectory of the swinging robotic leg set.

The swinging reference movement trajectory may be a desired movement trajectory of a swinging robotic leg. The swinging reference movement trajectory of the robot may be formed by a desired movement trajectory corresponding to each stepping period, and may be configured for guiding a swinging robotic leg set of the robot to swing. In all embodiments, the swinging reference movement trajectory corresponding to the stepping period may be represented by using a movement trajectory of a foot of a swinging robotic leg corresponding to the stepping period.

The initial position and the desired position corresponding to the swinging robotic leg set in the stepping period may be respectively an initial position of a corresponding stance robotic leg in the stepping period (i.e., a reference position of a stance robotic leg in a current stepping period) and an end position (i.e., a reference position of a stance robotic leg in a next stepping period of the current stepping period).

In all embodiments, the reference movement trajectory of the swinging robotic leg of the robot may be planned in the first direction (i.e., an x-axis direction) and the second direction (that is, a z-axis direction), and the second direction is perpendicular to the first direction. In this case, a process of obtaining the swinging reference movement trajectory may include the following content:

1. A world coordinate system corresponding to the robot is constructed, the world coordinate system being constructed by using an initial contact point between the robot and the support surface as an origin, the first direction as an x-axis direction, and the second direction perpendicular to the first direction as a z-axis direction.

A method for constructing the world coordinate system is the same as that described above, and therefore is not described in detail herein again.

2. Interpolation is performed on a position component of the initial position in the first direction and a position component of the desired position in the first direction through a spline interpolation method, to obtain a swinging reference movement trajectory of the swinging robotic leg set in the first direction.

Exemplarily, if interpolation is performed by using a cubic spline interpolation method, the swinging reference movement trajectory in the first direction may be expressed as follows:

$$P_{swing, x}\left(t_n\right) = a_0 + a_1 t_n + a_2 t_n^2 + a_3 t_n^3.$$

$t_n \in [0, (1-\alpha)T]$, and $t_n = t - nT$, which represents a control time normalized based on a stepping period T in the $n^{th}$ stepping period, $P_{swing, x}(t_n)$ represents a reference position of the swinging robotic leg in the first direction at the control time t, and $a_0...a_3$ represent coefficients, which may be calculated based on the following constraints:

$$P_{swing, x}\left(0\right) = a_0 = P_{stance, x}\left(nT\right);$$

$$P_{swing, x}\left(T\right) = a_0 + a_1 T + a_2 T^2 + a_3 T^3 = P_{stance, x}\left(\left(n+1\right) T\right);$$

$$\dot{P}_{swing, x}\left(0\right) = a_0 = 0;$$

$$\dot{P}_{swing, x}\left(T\right) = a_1 + 2a_2 T + 3a_3 T^2 = 0.$$

In all embodiments, during the obtaining of the swinging reference movement trajectory in the first direction by using the cubic spline interpolation method, parameters corresponding to the cubic spline interpolation method may be set, to prevent the swinging robotic leg from colliding with the support surface in the first direction.

3. Interpolation is performed on a position component of the initial position in the second direction and a position component of the desired position in the second direction through the spline interpolation method, to obtain a swinging reference movement trajectory of the swinging robotic leg set in the second direction.

A process of obtaining the swinging reference movement trajectory in the second direction is similar to the process of obtaining the swinging reference movement trajectory in the first direction. However, when the support surface includes a plurality of areas at different heights, to avoid collision between the foot of the robot and the support surface, the swinging reference movement trajectory in the second direction may be divided, based on a quantity of areas the robot needs to cross in a stepping period, into parts of a quantity the same as the quantity of areas the robot needs to cross, to avoid collision between the robot and the areas the robot needs to cross.

Exemplarily, when the support surface is a staircase including m steps, m being a positive integer, for each step, a desired intermediate position of the swinging robotic leg set at the step is obtained, a foot of the swinging robotic leg located at the intermediate position being higher than the step in the second direction and not contacting the step in the first direction; and interpolation is successively performed among the initial position, the desired intermediate positions respectively corresponding to the m steps, and the desired position in chronological order, to obtain the swinging reference movement trajectory of the swinging robotic leg set, m being a positive integer.

For example, when the robot climbs a first step, if the swinging robotic leg only needs to ride over the first step, the swinging reference movement trajectory in the second direction may be divided into two parts. When the robot climbs a second step, if the swinging robotic leg needs to cross the first step and ride over the second step, the swinging reference movement trajectory in the second direction may be divided into three parts.

In all embodiments of this disclosure, during the determining of the swinging reference trajectory of the swinging robotic leg set, interpolation may be performed among the initial position, the intermediate positions corresponding to respective steps, and the target position in chronological order, so as to make a swinging process of the robot for implementing step climbing more proper, and reduce a possibility of errors.

A description is provided by using an example in which the swinging reference movement trajectory in the second direction is divided into two parts. A time corresponding to the desired intermediate position is set to 1/2 of the swing phase (which may be set and adjusted based on an actual use requirement), and interpolation is performed by using a cubic spline interpolation method. A swinging reference movement trajectory in the second direction in a first phase may be expressed as follows:

$$P_{swing, z} \left( t_n \right) = a_0 + a_1 t_n + a_2 t_n{}^2 + a_3 t_n{}^3$$

$t_n \in [0, , (1 - \alpha) T/2]$, and $t_n = t - nT$, which represents a control time normalized based on a stepping period T in the $n^{th}$ stepping period, $P_{swing, z}(t_n)$ represents a reference position of the swinging robotic leg in the second direction at the control time t, and $a_0...a_3$ represent coefficients, which may be calculated based on the following constraints:

$$P_{swing, z} \left( 0 \right) = a_0 = P_{stance, z} \left( nT \right)$$

$$P_{swing, z} \left( \left( 1 - \alpha \right) T/2 \right) = a_0 + a_1 T + a_2 T^2 + a_3 T^3 = P_{stance, z} \left( nT \right) + \beta H_s$$

$$\dot{P}_{swing, z} \left( 0 \right) = a_0 = 0$$

$$\dot{P}_{swing, z} \left( T \right) = a_1 + 2 a_2 T + 3 a_3 T^2 = 0$$

$\beta \in [1 , 1.5]$ is a height coefficient, which represents a proportion by which a foot of the swinging robotic leg exceeds a height of a step in the $n^{th}$ stepping period.

If cubic spline interpolation is applied, a swinging reference movement trajectory in the second direction in a second phase may be expressed as follows:

$$P_{swing, z} \left( t_n \right) = a_0 + a_1 t_n + a_2 t_n{}^2 + a_3 t_n{}^3$$

$t_n \in [(1 - \alpha) T/2, (1 - \alpha) T]$, and $t_n = t - nT$, which represents a control time normalized based on a stepping period T in the $n^{th}$ stepping period, $P_{swing, z}(t_n)$ represents a reference position of the swinging robotic leg in the second direction at the control time t, and $a_0 ... a_3$ represent coefficients, which may be calculated based on the following constraints:

$$P_{swing, z} \left( (1 - \alpha) T/2 \right) = a_0 = P_{stance, z} (nT) + \beta H_s ,$$

$$P_{swing, z} \left( (1 - \alpha) T \right) = a_0 + a_1 T + a_2 T^2 + a_3 T^3 = P_{stance, z} \left( (n + 1) T \right) ;$$

$$\dot{P}_{swing, z} (0) = a_0 = 0 ;$$

$$\dot{P}_{swing, z} (T) = a_1 + 2 a_2 T + 3 a_3 T^2 = 0 .$$

The swinging reference movement trajectory in the second direction in the first phase is spliced with the swinging reference movement trajectory in the second direction in the second phase, to obtain the swinging reference movement trajectory in the second direction.

4. The swinging reference movement trajectory of the swinging robotic leg set is obtained based on the swinging reference movement trajectory of the swinging robotic leg set in the first direction and the swinging reference movement trajectory of the swinging robotic leg set in the second direction.

In this embodiment of this disclosure, because the swinging reference movement trajectory of the swinging robotic leg set is determined in comprehensive consideration of the swinging reference movement trajectory of the swinging robotic leg set in the first direction and the swinging reference movement trajectory of the swinging robotic leg set in the second direction, accuracy of the determined swinging reference movement trajectory is improved, which facilitates subsequent precise control of the robot.

In all embodiments, the swinging reference movement trajectory may be a combination of the swinging reference movement trajectory of the swinging robotic leg set in the first direction and the swinging reference movement trajectory of the swinging robotic leg set in the second direction.

Operation S104: Control, based on the center-of-mass reference movement trajectory and the swinging reference movement trajectory, the robot to propel the swinging robotic leg set forward in the first direction while maintaining the stance robotic leg set as a support.

In all embodiments, the robot may determine a center-of-mass reference position of the robot, a reference position of a swinging robotic leg, and a reference position of a stance robotic leg at each control time based on the center-of-mass reference movement trajectory, the swinging reference movement trajectory, and the stance reference movement trajectory, and the robot controls, in chronological order, each robotic leg, the body, the waist, and the like to successively follow each reference position at each control time, to propel the swinging robotic leg set in the first direction while maintaining the stance robotic leg set as a support, thereby completing the movement task on the support surface.

For example, in a scenario in which the robot climbs a staircase, the robot follows the center-of-mass reference movement trajectory, the swinging reference movement trajectory, and the stance reference movement trajectory, and can complete the staircase climbing task after n stepping periods (in this case, n may be a quantity of steps). In a scenario in which the robot crosses a road shoulder, the robot follows the center-of-mass reference movement trajectory, the swinging reference movement trajectory, and the stance reference movement trajectory, and can complete the road shoulder crossing task after n stepping periods (in this case, n may be 2, i.e., two swinging processes). In a scenario in which the robot crosses a pit, the robot follows the center-of-mass reference movement trajectory, the swinging reference movement trajectory, and the stance reference movement trajectory, and can complete the pit crossing task after n stepping periods (in this case, n may be 2, i.e., two swinging processes).

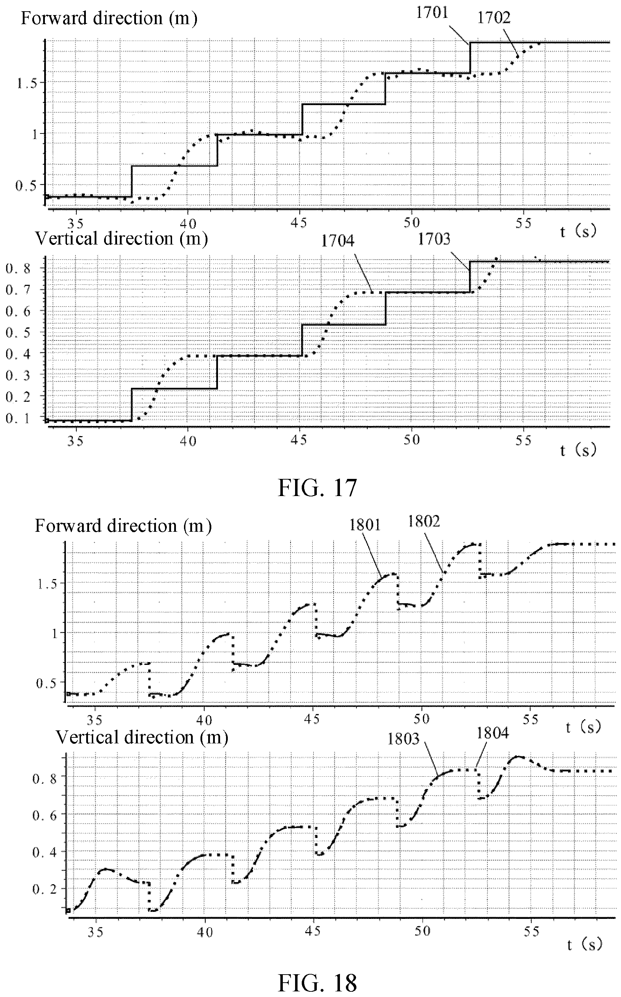

In some embodiments, FIG. 17 to FIG. 20 illustrate a process of following each reference movement trajectory.

In FIG. 17, a curve 1701 is a stance reference movement trajectory corresponding to a stance robotic leg set in a first direction (i.e., a forward-moving direction), a curve 1702 is an actual movement trajectory corresponding to the stance robotic leg set in the first direction (i.e., the forward-moving direction), a curve 1703 is a stance reference movement trajectory corresponding to the stance robotic leg set in a second direction (i.e., a vertical direction), and a curve 1704 is an actual movement trajectory corresponding to the stance robotic leg set in the second direction (i.e., the vertical direction). It may be learned that the robot can follow the stance reference movement trajectory relatively desirably, so as to implement a support function of the stance robotic leg set.

In FIG. 18, a curve 1801 is a swinging reference movement trajectory corresponding to a swinging robotic leg set in a first direction (i.e., a forward-moving direction), a curve 1802 is an actual movement trajectory corresponding to the swinging robotic leg set in the first direction (i.e., the forward-moving direction), a curve 1803 is a swinging reference movement trajectory corresponding to the swinging robotic leg set in a second direction (i.e., a vertical direction), and a curve 1804 is an actual movement trajectory corresponding to the swinging robotic leg set in the second direction (i.e., the vertical direction). It may be learned that the robot can follow the swinging reference movement trajectory relatively desirably, so as to implement a swinging function of the swinging robotic leg set.

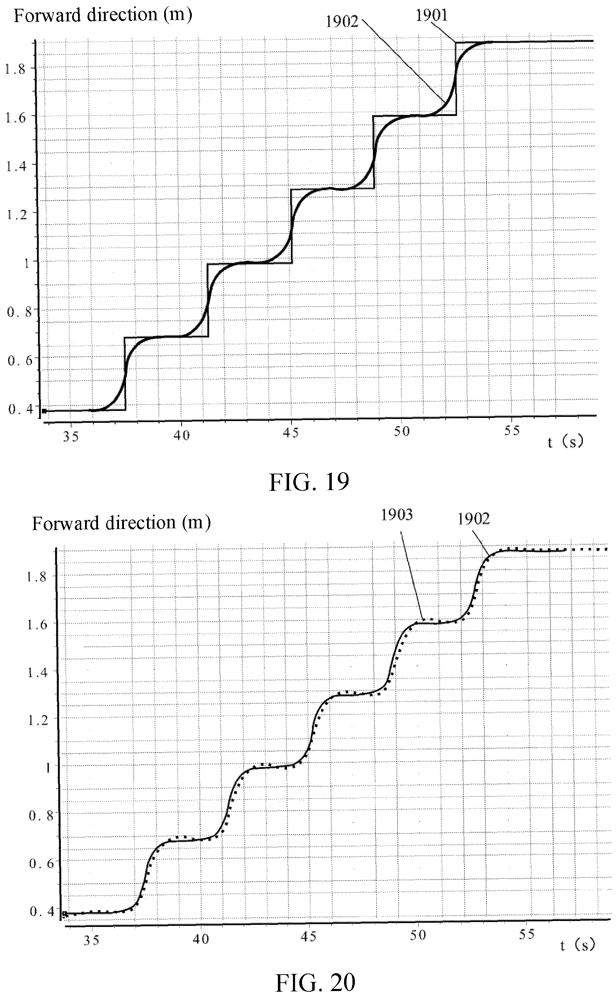

In FIG. 19 and FIG. 20, a curve 1901 is a ZMP reference trajectory corresponding to a ZMP in a first direction (i.e., a forward-moving direction), a curve 1902 is a center-of-mass reference movement trajectory corresponding to a center of mass in the first direction, and a curve 1903 is an actual movement trajectory corresponding to the center of mass in the first direction. It may be learned that the robot can follow the center-of-mass reference movement trajectory in the first direction relatively desirably, to adjust the center of mass of the robot.

In conclusion, in the technical solution provided in this embodiment of this disclosure, for the robot having the first robotic leg set and the second robotic leg set, because centers of rotation of hip joints corresponding to the first robotic leg set and the second robotic leg set are located on a same vertical plane, one robotic leg set may be caused to stand, and the other robotic leg set may be caused to swing, so that the robot quickly moves in a dynamic balanced state (to be specific, a center of gravity of the robot may exceed a stance area of the robot), thereby improving the robot movement efficiency. In addition, controlling the first robotic leg set and the second robotic leg set to swing alternately to control the robot to move can further improve the robot movement efficiency.

In addition, the technical solutions provided in the embodiments of this disclosure enable the robot to have an obstacle crossing capability, such as climbing a staircase, crossing a road shoulder, or crossing a pit, thereby improving a real environment adaptability of the robot.

An apparatus embodiment of this disclosure is described below, which may be configured for performing the method embodiment of this disclosure. For details not disclosed in the apparatus embodiment of this disclosure, refer to the method embodiment of this disclosure.

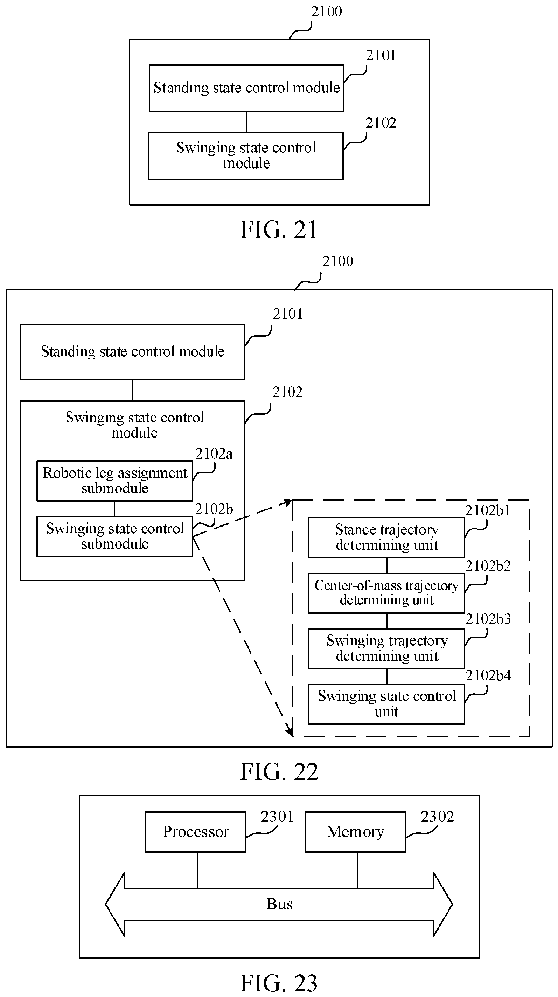

FIG. 21 is a block diagram of a robot control apparatus according to an embodiment of this disclosure. The apparatus has a function of implementing the foregoing robot control method. The function may be implemented by hardware, or may be implemented by hardware executing corresponding software. The apparatus may be the computer device described above (for example, the wheeled-legged robot), or may be arranged in the computer device. As shown in FIG. 21, the apparatus 2100 includes a standing state control module 2101 and a swinging state control module 2102.

The standing state control module 2101 is configured to control, in an initial state of movement of the robot, the robot to stand on a support surface in an overlapping standing state in which respective robotic legs of the robot standing on the support surface are in alignment in a first direction.

The swinging state control module 2102 is configured to control a first robotic leg set and the second robotic leg set to swing alternately to achieve the movement of the robot on the support surface along the first direction.

In all embodiments, the robot may be controlled to stop moving after n stepping periods, each stepping period indicating a duration for the first robotic leg set or the second robotic leg set to execute one swing cycle, and n being a positive integer.

As shown in FIG. 22, the swinging state control module 2102 includes a robotic leg assignment submodule 2102a and a swinging state control submodule 2102b.

The robotic leg assignment submodule 2102a is configured to determine, for each stepping period, determine one of the first robotic leg set and the second robotic leg set as a stance robotic leg set and the other as a swinging robotic leg set.

The swinging state control submodule 2102b is configured to propel the swinging robotic leg set forward in the first direction while maintaining the stance robotic leg set as a support.

The swinging state control submodule 2102b is further configured to stop propelling the swinging robotic leg set upon the swinging robotic leg set reaching a target position on the support surface corresponding to the stepping period.

In all embodiments, as shown in FIG. 22, the swinging state control submodule 2102b may include a stance trajectory determining unit 2102b1, a center-of-mass trajectory determining unit 2102b2, a swinging trajectory determining unit 2102b3, and a swinging state control unit 2102b4.

The stance trajectory determining unit 2102b1 is configured to determine a stance reference movement trajectory of the stance robotic leg set based on size information of an area on the support surface corresponding to the stepping period and a step length of the robot in the stepping period.

The center-of-mass trajectory determining unit 2102b2 is configured to determine a center-of-mass reference movement trajectory of the robot based on the stance reference movement trajectory of the stance robotic leg set, the center-of-mass reference movement trajectory being a reference movement trajectory of a center of mass of the robot.

The swinging trajectory determining unit 2102b3 is configured to perform interpolation between an initial position and a desired position corresponding to the swinging robotic leg set in the stepping period, to obtain a swinging reference movement trajectory of the swinging robotic leg set.

The swinging state control unit 2102b4 is configured to control, based on the center-of-mass reference movement trajectory and the swinging reference movement trajectory, the robot to propel the swinging robotic leg set forward in the first direction while maintaining the stance robotic leg set as a support.

In all embodiments, the stepping period may include a swing phase and a stance phase, a robotic leg in the swing phase is in a swinging state, and a robotic leg in the stance phase is in a stance state. The center-of-mass trajectory determining unit 2102b2 is configured to:

determine a center-of-mass reference movement trajectory of the robot in a second direction based on the stance reference movement trajectory, a stance phase duty ratio, and a constant height of the center of mass of the robot relative to a foot of the stance robotic leg set, the stance phase duty ratio indicating a ratio of a duration in which a swinging robotic leg of the robot is in the stance state in each stepping period, in the swing phase, the center-of-mass reference movement trajectory in the second direction being obtained through interpolation of an initial position and an end position in the stance reference movement trajectory in combination with the constant height, in the stance phase, the center-of-mass reference movement trajectory in the second direction being fixed at the end position with the constant height, and the second direction being perpendicular to the first direction; and

determine a ZMP reference trajectory of the robot based on the stance reference movement trajectory and the stance phase duty ratio, in the swing phase, the ZMP reference trajectory being the same as a stance leg contact point reference trajectory on the support surface, and in the stance phase, the ZMP reference trajectory being obtained through interpolation between the initial position and the end position in the stance reference movement trajectory;

determine a center-of-mass reference movement trajectory of the robot in the first direction based on the ZMP reference trajectory; and

determine the center-of-mass reference movement trajectory of the robot based on the center-of-mass reference movement trajectory of the robot in the second direction and the center-of-mass reference movement trajectory of the robot in the first direction.

In all embodiments, the center-of-mass trajectory determining unit 2102b2 may be configured to:

construct a state variable of a discrete-time state equation of the robot by using a ZMP position, a center-of-mass position of the robot in the first direction, and a center-of-mass velocity of the robot in the first direction;

construct an objective function based on a reference position of the ZMP in the ZMP reference trajectory through an SLQR control method;

determine a feedback gain matrix based on the objective function;

construct a control variable of the discrete-time state equation based on the feedback gain matrix, the center-of-mass position of the robot in the first direction, and the reference position of the ZMP in the ZMP reference trajectory; and

input the state variable and the control variable into the discrete-time state equation, to obtain the center-of-mass reference movement trajectory of the robot in the first direction through iteration.

In all embodiments, the swinging trajectory determining unit 2102b3 may be configured to:

establish a world coordinate system corresponding to the robot, wherein an initial contact point between the robot and the support surface is defined as an origin, the first direction is defined as an x-axis direction, and the second direction perpendicular to the first direction is defined as a z-axis direction;

apply spline interpolation on a position component of the initial position and a position component of the target position in the first direction, to obtain a swinging reference movement trajectory of the swinging robotic leg set in the first direction;

apply spline interpolation on a positional component of the initial position and a positional component of the target position in the second direction, to obtain a swinging reference movement trajectory of the swinging robotic leg set in the second direction; and

obtain the swinging reference movement trajectory of the swinging robotic leg set based on the swinging reference movement trajectory of the swinging robotic leg set in the first direction and the swinging reference movement trajectory of the swinging robotic leg set in the second direction.

In all embodiments, the support surface may be a staircase including m steps, m being a positive integer. The swinging trajectory determining unit 2102b3 is further configured to:

determine, for each step, an intermediate position of the swinging robotic leg set at the step where a foot of the swinging robotic leg positioned at the intermediate position is higher than the step in the second direction and not contacting the step in the first direction; and

sequentially interpolating between the initial position, the intermediate positions respectively corresponding to the m steps, and the target position, to obtain the swinging reference movement trajectory of the swinging robotic leg set.

In all embodiments, the stepping period may include the swing phase and the stance phase, the robotic leg in the swing phase is in the swinging state, and the robotic leg in the stance phase is in the stance state. The robotic leg assignment submodule 2102a is configured to:

obtain gait information of the robot based on the number of stepping periods n and the stance phase duty ratio of the robot, wherein the stance phase duty ratio indicates the percentage of time the swinging robotic leg of the robot remains in the stance state in each stepping period, and the gait information indicates whether a robotic leg of the robot is a swinging robotic leg in each stepping period; and

determine the stance robotic leg set and the swinging robotic leg set corresponding to the stepping period from the first robotic leg set and the second robotic leg set based on the gait information.

In all embodiments, the swinging state control module 2102 may be configured to extend a leg length of each robotic leg in the stance robotic leg set during the swinging of the swinging robotic leg set in the first direction in the swing phase of the stepping period.

In all embodiments, the hip joints of the robot may be coaxial.

In all embodiments, robotic legs in the first robotic leg set may move synchronously, robotic legs in the second robotic leg set may move synchronously, and the body of the robot may keep vertical during movement of the robot.

In conclusion, in the technical solution provided in this embodiment of this disclosure, for the robot having the first robotic leg set and the second robotic leg set, because centers of rotation of hip joints corresponding to the first robotic leg set and the second robotic leg set are located on a same vertical plane, one robotic leg set may be caused to stand, and the other robotic leg set may be caused to swing, so that the robot quickly moves in a dynamic balanced state (to be specific, a center of gravity of the robot may exceed a stance area of the robot), thereby improving the robot movement efficiency. In addition, controlling the first robotic leg set and the second robotic leg set to swing alternately to control the robot to move can further improve the robot movement efficiency.

When the apparatus provided in the foregoing embodiment implements the functions of the apparatus, only division of the foregoing functional modules is used as an example for description. In a practical application, the functions may be completed by different functional modules as required. To be specific, an internal structure of a device is divided into different functional modules to complete all or part of the functions described above. In addition, the apparatus provided in the foregoing embodiment belongs to the same idea as the method embodiment. For details of the specific implementation process thereof, refer to the method embodiment. Details are not described herein again.

FIG. 23 is a simplified structural block diagram of a computer device according to an embodiment of this disclosure. The computer device may be any electronic device having data computing, processing, and storage capabilities.

As shown in FIG. 23, the computer device may include a processor 2301 and a memory 2302. The processor 2301 may include but is not limited to a central processing unit (CPU), a graphics processing unit (GPU), and a field programmable gate array (FPGA). The memory 2302 may include a random access memory (RAM) and a read-only memory (ROM). The processor 2301 and the memory 2302 may be connected through a system bus.

In all embodiments, the memory 2302 may have a computer program stored therein, the computer program being loaded and executed by the processor 2301 to implement the foregoing robot control method.

In all embodiments, a computer-readable storage medium may be further provided, the storage medium having a computer program stored therein, the computer program, when executed by the computer device, implementing the foregoing robot control method.

In all embodiments, the computer-readable storage medium may include a ROM, a RAM, a solid state drive (SSD), an optical disc, or the like. The RAM may include a resistance random access memory (ReRAM) and a dynamic random access memory (DRAM).

In some embodiments, a computer program product is further provided, the computer program product including a computer program, the computer program being stored in a computer-readable storage medium. The processor of the computer device reads the computer program from the computer-readable storage medium, and the processor executes the computer program, so that the computer device performs the foregoing robot control method.

In the embodiments of this disclosure, a prompt interface or a pop-up window may be displayed or voice prompt information may be outputted before and during collection of relevant data of a user. The prompt interface, the pop-up window, or the voice prompt information is configured for prompting the user that the relevant data is currently being collected, so that in this disclosure, the relevant operation of obtaining the relevant data of the user is started only after a confirmation operation performed by the user on the prompt interface or the pop-up window is obtained. Otherwise (i.e., when the confirmation operation performed by the user on the prompt interface or the pop-up window is not obtained), the relevant operation of obtaining the relevant data of the user is ended, i.e., the relevant data of the user is not obtained. In other words, all user data collected in this disclosure is processed in strict accordance with requirements of relevant national laws and regulations, and informed consent or individual consent of a subject of personal information is collected with consent and authorization of the user. Within the scope of authorization of laws and regulations and the subject of personal information, subsequent use and processing behaviors of data are carried out, and the collection, use, and processing of relevant user data need to comply with the relevant laws, regulations, and standards of relevant countries and regions. For example, all real environments, support surfaces, and the like involved in this disclosure are obtained under full authorization.

"Plurality of" mentioned in the specification means two or more. The term "and/or" is an association relationship for describing associated objects and represents that three relationships may exist. For example, A and/or B may represent the following three cases: only A exists, both A and B exist, and only B exists. The character "/" generally indicates an "or" relationship between a preceding associated object and a succeeding associated object. In addition, the operation numbers described in this specification merely exemplarily show a possible execution sequence of the operations. In some other embodiments, the foregoing operations may not be performed based on the number sequence. For example, two operations with different numbers may be performed simultaneously, or two operations with different numbers may be performed based on a sequence contrary to the sequence shown in the figure. This is not limited in the embodiments of this disclosure.

The foregoing descriptions are merely exemplary embodiments of this disclosure, and are not intended to limit this disclosure. Any modification, equivalent replacement, or improvement made within the spirit and principle of this disclosure falls within the protection scope of this disclosure.

**Claims**

1. A robot control method, executed by a computer device, the robot comprising: a body; a first robotic leg set and a second robotic leg set each connected to the body through one or more hip joints; wherein at least one of the first robotic leg set and the second robotic leg set comprises at least two robotic legs symmetrically arranged on two sides of a central axis of the robot; and rotation centers of the hip joints of both the first robotic leg set and the second robotic leg set are coplanar within a vertical plane of the body, and the method comprising:

   controlling, in an initial state of movement of the robot, the robot to stand on a support surface in an overlapping standing state in which the respective robotic legs standing on the support surface are in alignment in a first direction; and
   controlling the first robotic leg set and the second robotic leg set to swing alternately to achieve the movement of the robot on the support surface along the first direction.

2. The method according to claim 1, wherein the robot is controlled to stop moving after completing n stepping periods, wherein a stepping period indicates a duration for the first robotic leg set or the second robotic leg set to execute one swing cycle, and n being a positive integer; and
   the controlling the first robotic leg set and the second robotic leg set to swing alternately to move the robot on the support surface along the first direction comprises:
   for each of the n stepping periods:

   determining one of the first robotic leg set and the second robotic leg set as a stance robotic leg set and the other as a swinging robotic leg set ;
   propelling the swinging robotic leg set forward in the first direction while maintaining the stance robotic leg set as a support; and

stopping propelling the swinging robotic leg set upon the swinging robotic leg set reaching a target position on the support surface corresponding to the stepping period.

3. The method according to claim 2, wherein the propelling the swinging robotic leg set forward in the first direction while maintaining the stance robotic leg set as a support comprises:

determining a stance reference movement trajectory of the stance robotic leg set based on support area dimensions on the support surface for the stepping period and a step length of the robot in the stepping period; determining a center-of-mass reference movement trajectory of the robot based on the stance reference movement trajectory, the center-of-mass reference movement trajectory being a reference movement trajectory of a center of mass of the robot;

interpolating between an initial position and the target position corresponding to the swinging robotic leg set in the stepping period, to obtain a swinging reference movement trajectory of the swinging robotic leg set; and controlling, based on the center-of-mass reference movement trajectory and the swinging reference movement trajectory, the robot to propel the swinging robotic leg set forward in the first direction while maintaining the stance robotic leg set as a support.

4. The method according to claim 3, wherein each of the n stepping periods comprises a swing phase where the robotic legs of the swinging robotic leg set are in a swing state and a stance phase where the robotic legs of the swinging robotic leg set are in a stance state; and

the determining the center-of-mass reference movement trajectory of the robot based on the stance reference movement trajectory of the stance robotic leg set comprises:

determining a second directional center-of-mass reference movement trajectory of the robot in a second direction based on the stance reference movement trajectory, a stance phase duty ratio, and a constant vertical height of the center of mass of the robot relative to a foot of the stance robotic leg set; wherein the stance phase duty ratio indicates a percentage of time a swinging robotic leg of the robot remains in the stance state in each stepping period; during the swing phase, the second directional center-of-mass reference movement trajectory is obtained through interpolating between initial and end positions from the stance reference movement trajectory, while maintaining the constant height; during the stance phase, the second directional center-of-mass reference movement trajectory is fixed at the end position with the maintained constant height, and the second direction is perpendicular to the first direction; and

determining a zero moment point (ZMP) reference trajectory of the robot based on the stance reference movement trajectory and the stance phase duty ratio; wherein during the swing phase, the ZMP reference trajectory is the same as a stance leg contact point reference trajectory on the support surface; and during the stance phase, the ZMP reference trajectory is obtained through interpolating between the initial and end positions in the stance reference movement trajectory;

determining a first directional center-of-mass reference movement trajectory of the robot in the first direction based on the ZMP reference trajectory; and

determining the center-of-mass reference movement trajectory of the robot based on the second directional center-of-mass reference movement trajectory and the first directional center-of-mass reference movement trajectory.

5. The method according to claim 4, wherein the determining the first directional center-of-mass reference movement trajectory of the robot in the first direction based on the ZMP reference trajectory comprises:

constructing a state variable for a discrete-time state equation of the robot based on a ZMP position, a center-of-mass position of the robot in the first direction, and a center-of-mass velocity of the robot in the first direction; constructing an objective function based on a reference position of the ZMP in the ZMP reference trajectory through a singular linear quadratic regulator (SLQR) control method;

determining a feedback gain matrix based on the objective function;

constructing a control variable for the discrete-time state equation based on the feedback gain matrix, the center-of-mass position of the robot in the first direction, and the reference position of the ZMP in the ZMP reference trajectory; and

inputting the state variable and the control variable into the discrete-time state equation, to obtain the first directional center-of-mass reference movement trajectory.

**6.** The method according to any one of claims 3 to 5, wherein the interpolating between the initial position and the target position corresponding to the swinging robotic leg set in the stepping period, to obtain the swinging reference movement trajectory of the swinging robotic leg set comprises:

establishing a world coordinate system for the robot, wherein an initial contact point between the robot and the support surface is an origin, the first direction is an x-axis direction, and the second direction perpendicular to the first direction is a z-axis direction;

applying spline interpolation on a positional component of the initial position and a positional component of the target position in the first direction, to obtain a first directional swinging reference movement trajectory of the swinging robotic leg set in the first direction;

applying spline interpolation on a positional component of the initial position and a positional component of the target position in the second direction, to obtain a second directional swinging reference movement trajectory of the swinging robotic leg set in the second direction; and

obtaining the swinging reference movement trajectory of the swinging robotic leg set based on the first directional swinging reference movement trajectory and the second directional swinging reference movement trajectory.

**7.** The method according to any one of claims 3 to 6, wherein the support surface is a staircase comprising m steps, m being a positive integer; and

the interpolating between the initial position and the target position corresponding to the swinging robotic leg set in the stepping period, to obtain the swinging reference movement trajectory of the swinging robotic leg set comprises:

for each of the m steps:

determining an intermediate position of the swinging robotic leg set where a foot of the swinging robotic leg positioned at the intermediate position is higher than the step in the second direction and not contacting the step in the first direction; and

sequentially interpolating between the initial position, intermediate positions respectively corresponding to the m steps, and the target position, to obtain the swinging reference movement trajectory of the swinging robotic leg set.

**8.** The method according to any one of claims 2 to 7, wherein the stepping period comprises a swing phase where the robotic legs are in a swing state and a stance phase where the robotic legs are in a stance state; and

the determining one of the first robotic leg set and the second robotic leg set as the stance robotic leg set and the other as the swinging robotic leg set comprises:

obtaining gait information of the robot based on the number of stepping periods n and the stance phase duty ratio of the robot; wherein the stance phase duty ratio indicates the percentage of time the swinging robotic leg of the robot remains in the stance state in each stepping period, and the gait information indicates whether a robotic leg of the robot is a swinging robotic leg in each stepping period; and

determining the stance robotic leg set and the swinging robotic leg set for each stepping period based on the gait information.

**9.** The method according to any one of claims 2 to 8, wherein the propelling the swinging robotic leg set forward in the first direction while maintaining the stance robotic leg set as a support comprises:

extending leg length of each robotic leg in the stance robotic leg set during the swinging of the swinging robotic leg set in the first direction in the swing phase of the stepping period.

**10.** The method according to any one of claims 1 to 9, wherein the hip joints of the robot are coaxial.

**11.** The method according to any one of claims 1 to 10, wherein robotic legs in the first robotic leg set move synchronously, robotic legs in the second robotic leg set move synchronously, and the body of the robot keeps vertical during movement of the robot.

**12.** A robot control apparatus, the robot comprising: a body; a first robotic leg set and a second robotic leg set each connected to the body through one or more hip joints; wherein at least one of the first robotic leg set and the second robotic leg set comprises at least two robotic legs symmetrically arranged on two sides of a central axis of the robot; and rotation centers of the hip joints of the first robotic leg set and the second robotic leg set are coplanar within a vertical plane of the body, and the apparatus comprising:

a standing state control module, configured to control in an initial state of movement of the robot, the robot to stand on a support surface in an overlapping standing state in which the respective robotic legs standing on the support surface are in alignment in a first direction is zero; and

a swinging state control module, configured to control the first robotic leg set and the second robotic leg set to swing alternately to achieve a movement of the robot on the support surface along the first direction.

13. A computer device, comprising a processor and a memory, the memory having a computer program stored therein, the computer program being loaded and executed by the processor to implement the robot control method according to any one of claims 1 to 11.

14. A computer-readable storage medium, having a computer program stored therein, the computer program being loaded and executed by a processor to implement the robot control method according to any one of claims 1 to 11.

15. A computer program product, comprising a computer program, the computer program being stored in a computer-readable storage medium, and a processor reading the computer program from the computer-readable storage medium and executing the computer program to implement the robot control method according to any one of claims 1 to 11.

FIG. 1

**200**

Sagittal plane

209
208
207
205
206
rotation center of of hip joint
204
201
202
203

FIG. 2

FIG. 3

FIG. 4

FIG. 5

| Control the robotic legs of the robot to stand on a support surface in an overlapping standing state in which the respective robotic legs standing on the support surface are in alignment in a first direction | 601 |

| Control the first robotic leg set and the second robotic leg set to swing alternately to achieve the movement of the robot on the support surface along the first direction | 602 |

FIG. 6

701

702

703

FIG. 7

Determine, for each stepping period, one of the first robotic leg set and the second robotic leg set as a stance robotic leg set and the other as a swinging robotic leg set

602a

Propel the swinging robotic leg set forward in the first direction while maintaining the stance robotic leg set as a support

602b

Stop propelling the swinging robotic leg set upon the swinging robotic leg set reaching a target position on the support plane corresponding to the stepping period

602c

FIG. 8

EP 4 609 998 A1

FIG. 9

FIG. 10

EP 4 609 998 A1

FIG. 11

FIG. 12

Determine a stance reference movement trajectory of a stance robotic leg set based on support area dimensions on a support plane for a stepping period and a step length of a robot in the stepping period

S101

Determine a center-of-mass reference movement trajectory of the robot based on the stance reference movement trajectory of the stance robotic leg set, the center-of-mass reference movement trajectory being a reference movement trajectory of a center of mass of the robot

S102

Perform interpolation between an initial position and a target position corresponding to a swinging robotic leg set in the stepping period, to obtain a swinging reference movement trajectory of the swinging robotic leg set

S103

Control, based on the center-of-mass reference movement trajectory and the swinging reference movement trajectory, the robot to propel the swinging robotic leg set forward in a first direction while maintaining the stance robotic leg set as a support

S104

FIG. 13

FIG. 14

1500

1501

B

z

x

1503

Ls

z

Hs

r

W 1

1502

FIG. 15

z

**1600**

$m\ddot{P}com, x$

mg

Pcom, z

W

Pzmp, x

Pcom, x

x

FIG. 16

Forward direction (m)

1701  1702

Vertical direction (m)

1704  1703

FIG. 17

Forward direction (m)

1801  1802

Vertical direction (m)

1803  1804

FIG. 18

FIG. 19

FIG. 20

2100

Standing state control module — 2101

Swinging state control module — 2102

FIG. 21

2100

Standing state control module — 2101

Swinging state control module — 2102

Robotic leg assignment submodule — 2102a

Swinging state control submodule — 2102b

Stance trajectory determining unit — 2102b1

Center-of-mass trajectory determining unit — 2102b2

Swinging trajectory determining unit — 2102b3

Swinging state control unit — 2102b4

FIG. 22

Processor — 2301    Memory — 2302

Bus

FIG. 23

## INTERNATIONAL SEARCH REPORT

| International application No. |
| --- |
| **PCT/CN2023/131776** |

| | |
| --- | --- |
| **A. CLASSIFICATION OF SUBJECT MATTER** | |
| B25J9/16(2006.01)i; B25J11/00(2006.01)i | |
| According to International Patent Classification (IPC) or to both national classification and IPC | |

| **B. FIELDS SEARCHED** |
| --- |
| Minimum documentation searched (classification system followed by classification symbols) |
| IPC:B25J |
| Documentation searched other than minimum documentation to the extent that such documents are included in the fields searched |
| Electronic data base consulted during the international search (name of data base and, where practicable, search terms used) |
| CNTXT, ENTXTC, CNKI, 万方, WANFANG: 机器人, 腿, 下肢, 足, 腰, 零力矩点, ZMP, 质心, 重心, 轨迹, 台阶, 楼梯, 阶梯; ENTXT, VEN, USTXT, WOTXT, EPTXT: robot, manipulator, leg, lower limb, foot, waist, zero momentum position, ZMP, centroid, center of gravity, trajectory, path, step, staircase. |

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005046950 A (ISHIKAWAJIMA-HARIMA HEAVY INDUSTRIES CO., LTD.) 24 February 2005 (2005-02-24) <br> description, paragraphs 17-28, and figures 1-7 | 1-2, 8-15 |
| Y | JP 2005046950 A (ISHIKAWAJIMA-HARIMA HEAVY INDUSTRIES CO., LTD.) 24 February 2005 (2005-02-24) <br> description, paragraphs 17-28, and figures 1-7 | 3-7 |
| Y | CN 112720462 A (SHENZHEN INSTITUTE OF ADVANCED TECHNOLOGY) 30 April 2021 (2021-04-30) <br> description, paragraphs 36-133, and figures 1-7c | 3-7 |
| A | CN 109202901 A (XIAMEN UNIVERSITY OF TECHNOLOGY) 15 January 2019 (2019-01-15) <br> entire document | 1-15 |
| A | CN 113721647 A (ZHEJIANG UNIVERSITY) 30 November 2021 (2021-11-30) <br> entire document | 1-15 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 January 2024** | **01 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/131776** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 113134833 A (UBTECH ROBOTICS CORP.) 20 July 2021 (2021-07-20)<br>      entire document | 1-15 |

Form PCT/ISA/210 (second sheet) (July 2022)

**INTERNATIONAL SEARCH REPORT**
Information on patent family members

International application No.

**PCT/CN2023/131776**

| Patent document cited in search report | | | Publication date (day/month/year) | Patent family member(s) | | | Publication date (day/month/year) |
|---|---|---|---|---|---|---|---|
| JP | 2005046950 | A | 24 February 2005 | None | | | |
| CN | 112720462 | A | 30 April 2021 | CN | 112720462 | B | 27 August 2021 |
| CN | 109202901 | A | 15 January 2019 | None | | | |
| CN | 113721647 | A | 30 November 2021 | CN | 113721647 | B | 01 August 2023 |
| CN | 113134833 | A | 20 July 2021 | WO | 2022205840 | A1 | 06 October 2022 |

Form PCT/ISA/210 (patent family annex) (July 2022)

**EP 4 609 998 A1**

**REFERENCES CITED IN THE DESCRIPTION**

**Patent documents cited in the description**

- CN 202310563089